# EUROPEAN PATENT SPECIFICATION

(11) **EP 1 674 526 B1**
(45) Date of publication and mention of the grant of the patent: **05.12.2012**
(21) Application number: 04788008.3
(22) Date of filing: 22.09.2004
(51) Int. Cl.: C08L 59/00, C08K 5/25, C08L 71/02, C08L 83/04

(54) **POLYACETAL RESIN COMPOSITION**
POLYACETALHARZZUSAMMENSETZUNG
COMPOSITION DE RESINE POLYACETAL

(30) Priority: 01.10.2003 JP 2003343684
(43) Date of publication of application: 28.06.2006
(73) Proprietor: Polyplastics Co., Ltd., Tokyo 108-8280 (JP)
(72) Inventor: HARASHINA, Hatsuhiko, c/o Polyplastics Co., Ltd., Fuji-shi, Shizuoka 4168533 (JP)
(74) Representative: Peel, James Peter
(86) International application number: PCT/JP2004/013825
(87) International publication number: WO 2005/033200

(56) References cited:
- EP-A2- 0 333 660
- WO-A-01/05888
- WO-A-02/24797
- DE-B- 1 235 577
- GB-A- 1 020 201
- JP-A- 4 345 648
- JP-A- 6 009 854
- JP-A- 10 036 524
- JP-A- 10 036 630
- JP-A- 10 298 401
- JP-A- 2001 178 805
- US-A- 3 574 786

## Description

### TECHNICAL FIELD

The present invention relates to a polyacetal-series resin composition in which formaldehyde emission (or generation) is remarkably inhibited, extrusion property and moldability are excellent, and blooming is suppressible; to a process of producing the same; and to a shaped (or molded) article formed from the resin composition.

### BACKGROUND ART

A polyacetal resin is excellent in mechanical property, fatigue resistance, friction or abrasion resistance, chemical resistance, and moldability. Therefore, the polyacetal resin has been widely utilized in various fields such as an automotive part, an electric or electronic device part, other precision machinery part, an architectural or pipeline part, a household utensil or cosmetic article part, or a medical device part. However, along with expansion or diversification in application, a polyacetal resin having higher quality has been demanded.

Characteristics (or properties) required for the polyacetal resin include characteristics that mechanical strength in a process step such as an extruding step or a molding step is not deteriorated, that deposit to a metal mold (or mold deposit) is not generated, that mechanical property under a long-term heating condition (heat aging) is adversely affected, and that incomplete (or defective) molding such as silver streak or void is not found in a shaped article. As one of the important factors responsible for such deterioration of strength or physical properties, and incomplete molding, the degradation of the polymer upon heating is exemplified. In particular, the polyacetal resin is inherently unstable in an oxidative atmosphere at an elevated temperature or in an acidic or alkaline environment because of its chemical structure. Therefore, the essential need that must be fulfilled for a polyacetal resin is that of insuring high thermal stability and minimal emission (or generation) of formaldehyde in the course of processing and from shaped articles. Formaldehyde is chemically active and ready to be oxidized to formic acid to adversely affect the heat resistance of resin. In addition, when the resin is used as electric or electronic parts, formaldehyde causes corrosion in metallic contacts or discoloration of the parts due to organic deposits, and contact errors occur. Furthermore, formaldehyde itself pollutes the working environment in parts assembling as well as the living environment around use of end products.

In order to stabilize chemically active terminals, the following methods are known: for a homopolymer, a method of esterifying the terminal of the polymer by acetylation or other means; and for a copolymer, a method of copolymerizing trioxane and a monomer having an adjacent carbon bond (e.g., a cyclic ether or a cyclic formal), and then decomposing and removing unstable terminal sites to make the unstable terminal sites stable (or inactive) terminal sites. However, in a heating process, cleavage (or fission) decomposition also occurs in the main chain part of the polymer. Only the above-mentioned treatment is insufficient to prevent the polymer from such a decomposition, and practically, it is considered that addition of a stabilizer (e.g. , an antioxidant, and other stabilizers) is essential for such inhibition.

However, even in the case blending these stabilizers, it is difficult to completely inhibit decomposition (or degradation) of the polyacetal resin. In practice, upon melt processing in an extruding step or a molding step for preparing a composition, the polyacetal resin undergoes an action of heat or oxygen inside of a cylinder of an extruder or a molding machine, thereby generating formaldehyde from a decomposed main chain thereof or an insufficiently stabilized terminal thereof, as a result, working environment is worsen in a extruding and molding process. Moreover, in the case carrying out molding for a long period, a finely powdered substance or a tar-like substance is deposited on a metal mold (mold deposit), thereby decreasing working efficiency. In addition, the mold deposit is one of the ultimate factors for deteriorating the surface condition of the shaped article. Further, the polymer decomposition causes deterioration in mechanical strength of the resin, and discoloration thereof. From such a viewpoint, a good deal of effort is continued for establishing more effective stabilizing formulation (or recipe) about the polyacetal resin.

As the antioxidant added to the polyacetal resin, a phenol-series (phenolic) compound having steric hindrance (hindered phenol), and an amine compound having steric hindrance (hindered amine) have been known. As other stabilizers, melamine, an alkali metal hydroxide, an alkaline earth metal hydroxide, and an organic or inorganic acid salt have been known. Moreover, antioxidants are generally used in combination with other stabilizers. However, even when such an additive(s) is/are used, it is difficult to inhibit formaldehyde emission (or generation) from a shaped article of the polyacetal resin.

US Patent No. 3152101 (Patent Document 1) discloses a composition comprising a polyacetal copolymer and a dicarboxylic acid dihydrazide (e.g., an aliphatic dicarboxylic acid dihydrazide having a carbon number of 3 to 10, an aromatic dicarboxylic acid dihydrazide, and an alicyclic dicarboxylic acid dihydrazide). Although use of such a short-chain aliphatic carboxylic acid hydrazide improves heat stability at some level thereby inhibiting emission of formaldehyde, such a composition is low in formability (or moldability). Therefore, mold deposit occurs, of the carboxylic acid hydrazide bleeds out of a shaped article formed with the composition. Moreover, this document concretely fails to disclose what kind of alicyclic dicarboxylic acid dihydrazide improves heat stability of the resin composition.
[Patent document 1] US Patent No. 3152101 (the first and the third columns)
JP 04 345648 discloses that in a polyacetal resin composition, 0.01-5.0 parts by weight of a hydrazine compound, represented by general formula (I), (II) or (III) is added to 100 parts by weight of a polyacetal resin. The general formula (I) is X-R1, the general formula (II) is X-R2-X and the general formula (III) is (X)n-R3 wherein R1 is a monovalent organic radical, R2 is a divalent organic radical, R3 is a polyvalent organic radical and X is -CONHNH2 (hydrazido group) and n is the valency of R3. US 6,753,363 discloses a polyacetal resin composition said to have high flame retardancy and stability which comprises a polyacetal resin, a flame retardant, and a basic nitrogen-containing compound (urea, amidine, aminotriazine, hydrazine, derivatives thereof, amide, urethane). JP 10 036 524 discloses a packaging material for packaging a resin generating aldehydes which is composed of a resin composition containing (A) a thermoplastic resin and (B) a compound having hydrazino group and/or hydrazono group.

### DISCLOSURE OF THE INVENTION

### PROBLEMS TO BE SOLVED BY THE INVENTION

It is therefore an object of the present invention to provide a polyacetal resin composition capable of improving heat (or thermal) stability of a polyacetal resin, and melt stability of a polyacetal resin in an extruding step or a molding step; and a process of producing the same; as well as an article as molded (or shaped) therefrom.

It is another object of the present invention to provide a polyacetal resin composition conducive to a marked inhibition of formaldehyde emission with a small amount of an additive added, and improvement in working environment; and a process of producing the same; as well as an article as molded (or shaped) therefrom.

It is still another object of the present invention to provide a polyacetal resin composition which is adapted for inhibiting emission of formaldehyde even under severe conditions to suppress deposition of decomposition products on the mold, blooming or bleeding of the decomposition products from a shaped article and thermal deterioration of the article, and which contributes to upgrading quality of the shaped article and improves the moldability; and a process of producing the same; as well as an article as molded (or shaped) therefrom.

It is further object of the present invention to provide a polyacetal resin composition in which an amount of formaldehyde emission from a polyacetal resin and a shaped article therefrom is inhibited to a significantly low level, and physical property such as weather (light)-resistant stability, impact resistance, or sliding property is improved; and an article as molded (or shaped) therefrom.

### MEANS TO SOLVE THE PROBLEMS

The inventor of the present invention made intensive studies or searches on a series of carboxylic acid hydrazide compounds regarding a stabilizer for a polyacetal resin to achieve the above objects and finally found that a specific carboxylic acid hydrazide compound significantly inhibits formaldehyde emission from a shaped article of a polyacetal resin, and brings about an excellent moldability and lowing of bleeding out of such a shaped article. The present invention was accomplished based on the above findings.

That is, the polyacetal resin composition of the present invention is as defined in claim 1.

The polyacetal resin composition may further comprise at least one member selected from the group consisting of a weather (light)-resistant stabilizer, an impact resistance improver, a slip-improving agent, a coloring agent, and a filler. The antioxidant, the processing stabilizer, the heat stabilizer, and the weather (light)-resistant stabilizer may be substantially free from an intramolecular ester bond. Incidentally, the resin composition of the present invention may improve in heat stability without substantially containing a phosphorus-containing flame retardant.

The present invention also includes a process for producing a polyacetal resin composition as defined in claim 11. In addition, the present invention further includes a shaped article formed from the polyacetal resin composition. The shaped article may be an automotive part, an electric or electronic device part (an electric and/or electronic device part), an architectural or pipeline part (an architectural and/or pipeline part), a household utensil or cosmetic article part (a household utensil and/or cosmetic article part), or a medical device part.

### EFFECTS OF THE INVENTION

According to the present invention, addition of a specific carboxylic acid hydrazide (a long- chain aliphatic carboxylic acid hydrazide, an alicyclic carboxylic acid hydrazide, a dimer or trimer acid hydrazide, an oxycarboxylic acid hydrazide corresponding to each of these carboxylic acid hydrazides) to a polyacetal resin improves heat stability of the polyacetal resin, and melt stability of the polyacetal resin in an extruding process or a molding process. Moreover, addition of only a small amount of the carboxylic acid hydrazide significantly ensures to inhibit formaldehyde generation, and drastically improves circumferential environment (e.g., working environment, and using environment). Further, the polyacetal resin composition of the present invention can inhibit emission of formaldehyde at an extremely low level even under severe conditions, deposition of decomposition products on the mold (mold deposit), blooming or bleeding of such products from a shaped article, and thermal aging or deterioration of the article, thus contributing to upgrading of the quality and moldability of the shaped article. Furthermore, addition of other additive(s) (e.g., a weather (light)-resistant stabilizer, an impact resistance improver, a slip-improving agent, a coloring agent, and a filler) ensures to inhibit the amount of formaldehyde emission from the polyacetal resin and the shaped article at an extremely low level, and provide a polyacetal resin composition and a shaped article which improve in physical properties such as weather (light)-resistant stability, impact resistance, and sliding property.

### DETAILED DESCRIPTION OF THE INVENTION

The resin composition of the present invention as defined in claim 1 comprises, inter alia, a polyacetal resin, and a specific carboxylic acid hydrazide.

### (Polyacetal resin)

The polyacetal resin is a macromolecular compound containing oxymethylene group (-OCH₂-) as a predominant constituent unit and includes polyacetal homopolymers or polyoxymethylenes (e.g. , trade name "Delrin", manufactured by DuPont, U.S.A.; trade name "Tenac 4010", manufactured by Asahi Kasei Corp.; etc.) and polyacetal copolymers comprising an oxymethylene unit and a comonomer unit (e.g., trade name "Duracon", manufactured by Polyplastics Co., Ltd.). Referring to such copolymers, the comonomer unit includes oxyalkylene units of about 2 to 6 carbon atoms (preferably about 2 to 4 carbon atoms), for example, oxyethylene (-OCH₂CH₂-), oxypropylene, and oxytetramethylene units. The proportion of such comonomer unit may be small and, for example, can be selected from the range of about 0.01 to 20 mole %, preferably about 0.03 to 15 mole % (e.g., 0.05 to 10 mole %), and more preferably about 0.1 to 10 mole %, relative to the whole polyacetal resin (the whole monomer units constituting the polyacetal resin).

The polyacetal copolymer may be, for example, a copolymer containing two components, a terpolymer containing three components and so on. The polyacetal copolymer may be also a random copolymer, a block copolymer (e.g., copolymers described in Japanese Patent Publication No. 24307/1990 (JP-2-24307B), manufactured by Asahi Kasei Corp., trade name "Tenac LA", "Tenac LM"), or a graft copolymer. Moreover, the polyacetal resin may be linear or branched, and may have a crosslinked structure. In addition, the end (or terminal) groups of the polyacetal resin may have been stabilized by esterification with a carboxylic acid such as acetic acid or propionic acid, or an anhydride thereof, urethanation with an isocyanate compound, or etherification. There is no particular limitation on the degree of polymerization, the degree of branching, or the degree of crosslinking of the polyacetal, provided it can be only melt-molded. There is no particular restriction as to the molecular weight of the polyacetal resin, and, for example, the weight average molecular weight is about 5,000 to 500,000, and preferably about 10,000 to 400,000.

The polyacetal resin can be, for example, produced by polymerizing an aldehyde such as formaldehyde, paraformaldehyde, or acetaldehyde; or a cyclic ether or cyclic formal such as trioxane, ethylene oxide, propylene oxide, butylene oxide, styrene oxide, cyclohexane oxide, cyclohexene oxide, 1,3-dioxolane, 1,3-dioxane, diethylene glycol formal, or 1,4-butanediol formal. Further, as a copolymerizable component, an alkyl or arylglycidyl ether (e.g., methylglycidyl ether, ethylglycidyl ether, phenylglycidyl ether, and naphthylglycidyl ether), an alkylene or polyoxyalkylene glycol diglycidyl ether (e.g., ethylene glycol diglycidyl ether, triethylene glycol diglycidylether, and butanediol diglycidylether), analkyl or aryl glycidyl alcohol, a cyclic ester (e.g., β-propiolactone), or a vinyl compound (e.g., styrene, and vinyl ether) can be employed.

### (Carboxylic acid hydrazide)

The characteristic of the present invention resides in addition of a specific carboxylic acid hydrazide and thereby remarkably improving processing stability of a polyacetal resin and remarkably inhibiting generation of formaldehyde.

The carboxylic acid hydrazide may include a saturated or unsaturated aliphatic C₁₆₋₄₀ carboxylic acid hydrazide, a dimer acid hydrazide, and an oxycarboxylic acid hydrazide as defined in claim 1. corresponding to each of these carboxylic acid hydrazides. The carboxylic acid constituting the carboxylic acid hydrazide may be a monocarboxylic acid, or may be a polycarboxylic acid (e.g., a dicarboxylic acid, and a tricarboxylic acid). The carboxylic acid hydrazide may include a monocarboxylic acid monohydrazide, a polycarboxylic acid mono- or polyhydrazide (e.g., a dicarboxylic acid monohydrazide, and a dicarboxylic acid dihydrazide).

The saturated or unsaturated C₁₆₋₄₀aliphatic carboxylic acid hydrazide may be for example a saturated aliphatic carboxylic acid hydrazide (for example, a monocarboxylic acid monohydrazide such as stearic acid hydrazide, arachidic acid hydrazide, behenic acid hydrazide, lignoceric acid hydrazide, cerotic acid hydrazide, heptacosanoic acid hydrazide, montanic acid hydrazide, melissic acid hydrazide, ceroplastic acid hydrazide, lacceric acid hydrazide, or geddic acid hydrazide; a polycarboxylic acid mono- or polyhydrazide such as hexadecanedioic acid mono- or dihydrazide, eicosanedioic acid mono- or dihydrazide, or heneicosanedioic acid mono-or dihydrazide (e.g., a dicarboxylic acid mono- or dihydrazide)), and an unsaturated aliphatic carboxylic acid hydrazide (for example, a monocarboxylic acid hydrazide such as oleic acid hydrazide, linoleic acid hydrazide, linolenic acid hydrazide, elaidic acid hydrazide, arachidonic acid hydrazide, eicosapentaenoic acid hydrazide, erucic acid hydrazide, brassidic acid hydrazide, or cetoleic acid hydrazide; a polycarboxylic acid mono-or polyhydrazide such as 8,12-eicosanedioic acid mono- or dihydrazide, or 7,12-dimethyl-7,11-octadecadiene-1,18-dicarboxylic acid mono- or dihydrazide (e.g., a dicarboxylic acid mono- or dihydrazide)). Incidentally, the number of carbon-carbon unsaturated bonds in the unsaturated aliphatic carboxylic acid constituting the unsaturated aliphatic carboxylic acid hydrazide is not particularly limited to a specific one, and may be, for example, about 1 to 10, preferably about 1 to 6, and more preferably about 1 to 3.

The saturated or unsaturated aliphatic C₁₆₋₄₀carboxylic acid hydrazide (e.g., a monocarboxylic acid monohydrazide, and a dicarboxylic acid mono- or dihydrazide), may particularly be, a monohydrazide of a C₂₂₋₄₀saturated aliphatic carboxylic acid, such as behenic acid hydrazide or montanic acid hydrazide; a dihydrazide of a C₁₆₋₄₀saturated aliphatic carboxylic acid, such as 12-eicosanedioic acid dihydrazide; and a C₁₈₋₄₀unsaturated aliphatic carboxylic acid hydrazide such as 8,12-eicosadienedioic acid dihydrazide. Incidentally, the details of processes for producing eicosanedioic acid dihydrazide and 8,12-eicosadienedioic acid may be referred to Japanese Patent Application Laid-Open No. 81119/1988 (JP-63-81119A), or others.

The oxycarboxylic acid hydrazide as defined in claim 1 has at least one hydroxyl group per one molecule. The number of hydroxyl groups is not particularly limited , and may be, for example, about 1 to 6, preferably about 1 to 4, and more preferably about 1 to 3. The saturated or unsaturated aliphatic oxyC₁₆₋₄₀carboxylic acid hydrazide may be a saturated aliphatic oxycarboxylic acid hydrazide [for example, a hydroxymonocarboxylic acid monohydrazide such as a hydroxystearic acid hydrazide (e.g., 2-, 9-, 10-, 12-, or 18-hydroxystearic acid hydrazide, and 9,10-dihydroxyoctadecanoic acid hydrazide), or cerebronic acid hydrazide; and a hydroxypolycarboxylic acid mono- or polyhydrazide such as hydroxyhexadecanedioic acid mono-or dihydrazide (e.g., a hydroxydicarboxylic acid mono- or dihydrazide)], or an unsaturated aliphatic oxycarboxylic acid [for example, a hydrazide of a hydroxy-mono- or polycarboxylic acid, such as ricinoleic acid hydrazide, ambrettolic acid hydrazide, aleuritic acid hydrazide, kamlolenic acid hydrazide, or phellonic acid hydrazide (e.g., a hydroxymonocarboxylic acid monohydrazide and a hydroxypolycarboxylic acid mono- or polyhydrazide (such as a hydroxydicarboxylic acid mono- or dihydrazide))]. Examples of the saturated or unsaturated aliphatic oxyC₁₆₋₄₀carboxylic acid hydrazide may include an aliphatic oxymonocarboxylic acid monohydrazide, and an aliphatic oxydicarboxylic acid mono- or dihydrazide.

Among them, a saturated or unsaturated aliphatic oxyC₁₆₋₄₀carboxylic acid hydrazide [in particular, a saturated or unsaturated aliphatic oxyC₁₆₋₃₆carboxylic acid hydrazide such as 9-, 10-, or 12-hydroxystearic acid hydrazide (particularly 12-hydroxystearic acid hydrazide), or ricinoleic acid hydrazide] is preferred.

As the saturated alicyclic carboxylic acid hydrazide, there are disclosed a saturated C₆₋₄₀alicyclic carboxylic acid hydrazide such as a monocarboxylic acid monohydrazide (for example, a cycloalkanecarboxylic acid hydrazide such as a cyclopentanecarboxylic acid hydrazide, a cyclohexanecarboxylic acid hydrazide, a cycloheptanecarboxylic acid hydrazide, a cyclooctanecarboxylic acid hydrazide, a cyclononanecarboxylic acid hydrazide, a cyclodecanecarboxylic acid hydrazide, a cycloundecanecarboxylic acid hydrazide, or a cyclododecanecarboxylic acid hydrazide; a polycycloalkanecarboxylic acid hydrazide such as a norbornanecarboxylic acid hydrazide, or an adamantanecarboxylic acid hydrazide; and a cycloalkyl-alkanecarboxylic acid hydrazide such as cyclohexylacetic acid hydrazide, or cyclohexylbutyric acid hydrazide), or a polycarboxylic acid mono- or polyhydrazide [for example, a di- to tetracarboxylic acid mono- to tetrahydrazide corresponding to each of the monocarboxylic acid monohydrazides (e.g., a dicarboxylic acid mono- or dihydrazide, a tricarboxylic acid mono- to trihydrazide, and a tetracarboxylic acid mono- to tetrahydrazide), for example, a cycloalkane di- or tricarboxylic acid hydrazide such as a 1,4-cyclohexanedicarboxylic acid mono- or dihydrazide, or 1,3,5-cyclohexanetricarboxylic acid mono-to trihydrazide (e.g., a cycloalkanedicarboxylic acidmono-or dihydrazide, and a cycloalkanetricarboxylic acid mono-to trihydrazide); a polycycloalkanedicarboxylic acid mono-or dihydrazide; a carboxyalkylcycloalkanecarboxylic acid monohydrazide, a hydrazinocarbonylalkylcycloalkanemonocarboxylic acid monohydrazide, a hydrazinocarbonylalkylcycloalkanecarboxylic acid, and a di(hydrazinocarbonylalkyl)cycloalkane].

Among the alicyclic carboxylic acid hydrazides, it is disclosed that an unsaturated alicyclic carboxylic acid hydrazide may include an unsaturated C₆₋₄₀alicyclic carboxylic acid hydrazide such as amonocarboxylic acid monohydrazide (e.g., a cycloalkenecarboxylic acid hydrazide such as a cyclopentenecarboxylic acid hydrazide, a cyclohexenecarboxylic acid hydrazide, a cycloheptenecarboxylic acid hydrazide, or a cyclooctenecarboxylic acid hydrazide; a polycycloalkenecarboxylic acid hydrazide such as norbornenecarboxylic acid hydrazide; a cycloalkenylalkanecarboxylic acid hydrazide such as hydnocarpic acid hydrazide, chaulmoogric acid hydrazide, or gorlic acid hydrazide), a polycarboxylic acid mono- or polyhydrazide [for example, a di- to tetracarboxylic acid mono- to tetra hydrazide corresponding to each of the above-mentioned monocarboxylic acid monohydrazides (e.g. , a dicarboxylic acid mono- or dihydrazide (e.g., a cycloalkenedicarboxylic acid mono- or dihydrazide), a tricarboxylic acid mono- to trihydrazide (e.g., a cycloalkenetricarboxylic acid mono- to trihydrazide), and a tetracarboxylic acid mono- to tetrahydrazide (e.g., a cycloalkenetetracarboxylic acid mono- to tetrahydrazide))]; or a trimer acid (e.g., a trimer acid of an unsaturated aliphatic carboxylic acid, such as a cyclic unsaturated linoleic trimer acid, or a cyclic unsaturated linolenic trimer acid) mono- to trihydrazide). Incidentally, the number of carbon-carbon unsaturated bonds in the unsaturated alicyclic carboxylic acid constituting the unsaturated alicyclic carboxylic acid hydrazide is not particularly limited to a specific one, and may be selected, depending on the member of an alicyclic ring thereof, from the range that the compound can maintain non-aromatic property. For example, the number of carbon-carbon unsaturated bonds may be about 1 to 6, preferably about 1 to 3, and more preferably 1 or 2.

Incidentally, a saturated or unsaturated alicyclic carboxylic acid hydrazide having a polycyclic structure (e.g., a polycycloalkanecarboxylic acid hydrazide, and a polycycloalkenecarboxylic acid hydrazide) may be obtained by hydrazidation of a Diels-Alder reaction product between an unsaturated alicyclic compound having 1,3-diene structure (e.g., a cycloalkadi- to tetra-ene such as cyclopentadiene, dicyclopentadiene, cyclohexadiene, or cyclooctadi- to tetra-ene) and an olefin compound [e.g., an alkyl (meth)acrylate, and maleic anhydride].

As an alicyclic carboxylic acid, a saturated or unsaturated C₆₋₂₀alicyclic carboxylic acid hydrazide such as a cyclohexanedicarboxylic acid hydrazide (e.g., 1,4-cyclohexanedicarboxylic acid mono- or hydrazide), for example, an alicyclic mono- or dicarboxylic acid mono- or dihydrazide), is disclosed.

It is disclosed that an alicyclic oxycarboxylic acid hydrazide may include an oxycarboxylic acid hydrazide corresponding to each of the above-mentioned alicyclic carboxylic acid hydrazides (e.g., a saturated or unsaturated alicyclic C₆₋₄₀oxycarboxylic acid hydrazide), for example, a hydroxy saturated or unsaturated alicyclic C₆₋₂₀carboxylic acid hydrazide such as a hydroxycyclohexanecarboxylic acid hydrazide, a hydroxycyclohexanedicarboxylic acid hydrazide, or a hydroxycyclohexenylcarboxylic acid hydrazide (e.g., a hydroxyalicyclic monocarboxylic acid monohydrazide, and a hydroxyalicyclic dicarboxylic acid mono- or dihydrazide).

It is sufficient that the alicyclic oxycarboxylic acid hydrazide has at least one hydroxyl group per one molecule thereof. The number of hydroxyl groups is not particularly limited to a specific one, and may be, for example, about 1 to 6, preferably about 1 to 4, and more preferably about 1 to 3.

It is disclosed that the dimer acid or trimer acid hydrazide may be either linear or cyclic, and may be either saturated or unsaturated. The dimer acid hydrazide or trimer acid hydrazide may include a dimer acid mono- or polyhydrazide [for example, a dimer acid mono- to tetrahydrazide (particularly, a dimer acid mono- or dihydrazide)], a trimer acid mono- or polyhydrazide [for example, a trimer acid mono- to hexahydrazide (particularly, a trimer acid mono- to trihydrazide)], and others.

As the dimer acid or trimer acid constituting the dimer acid hydrazide or trimer acid hydrazide, there may be mentioned a dimer or trimer of an unsaturated aliphatic carboxylic acid (for example, an unsaturated C₁₀₋₃₀aliphatic carboxylic acid such as an unsaturated monocarboxylic acid (such as oleic acid, linoleic acid, or linolenic acid), and in addition an unsaturated dicarboxylic acid).

Examples of the dimer acid hydrazide may include a dimer acid hydrazide (e.g., a C₂₀₋₆₀dimer acid hydrazide), for example, a linear saturated or unsaturated dimer acid hydrazide such as a linear saturated (or hydrogenated) dimer acid hydrazide (e.g., a linear saturated linoleic dimer acid mono- or dihydrazide), or a linear unsaturated dimer acid hydrazide (e.g., a linear linolenic dimer acid mono-or dihydrazide); and a cyclic saturated or unsaturated dimer acid hydrazide such as a cyclic saturated (or hydrogenated) dimer acid hydrazide (e.g., a cyclic saturated linoleic dimer acid mono- or dihydrazide), or a cyclic unsaturated dimer acid hydrazide (e.g., a cyclic unsaturated linoleic dimer acid mono- or dihydrazide, a cyclic unsaturated oleic dimer acid mono- or dihydrazide, and a cyclic unsaturated linolenic dimer acid mono- or dihydrazide). As the trimer acid hydrazide, there may be mentioned a linear or cyclic trimer acid hydrazide corresponding to each of the dimer acid hydrazides (e.g., a C₂₀₋₆₀trimer acid mono- to trihydrazide), for example, a linear saturated or unsaturated trimer acid hydrazide such as a linear saturated (or hydrogenated) trimer acid hydrazide, or a linear unsaturated trimer acid hydrazide; a cyclic saturated or unsaturated trimer acid hydrazide such as a cyclic saturated (or hydrogenated) trimer acid hydrazide (e.g., a cyclic saturated linoleic trimer acid hydrazide), or a cyclic unsaturated trimer acid hydrazide (e.g., a cyclic unsaturated linoleic trimer acid hydrazide); and others.

Moreover, the dimer acid or trimer acid hydrazide may be an oxydimer acid or oxytrimer acid hydrazide having a hydroxyl group. Incidentally, in the unsaturated dimer acid hydrazide or unsaturated trimer acid hydrazide, the number of carbon-carbon unsaturated bonds is not particularly limited to a specific one, and may be, for example, about 1 to 6, preferably about 1 to 4, and more preferably 1 or 2.

Among these dimer acid or trimer acid hydrazides (a saturated or unsaturated dimer acid hydrazide, and a saturated or unsaturated trimer acid hydrazide), particularly, a linear C₂₀₋₄₀dimer acid mono- or dihydrazide (e.g., a linear linoleic dimer acid hydrazide, and a linear linolenic dimer acid hydrazide), a cyclic C₂₀₋₄₀dimer acid mono- or dihydrazide (e.g., a cyclic linoleic dimer acid hydrazide), a linear C₃₀₋₆₀trimer acid mono- to trihydrazide, a cyclic C₃₀₋₆₀trimer acid mono- to trihydrazide (e.g., a cyclic linoleic trimer acid hydrazide), and others are disclosed. Among them, at least one member selected from the group consisting of montanic acid hydrazide, eicosanedioic acid dihydrazide, 8,12-eicosadienedioic acid dihydrazide, 12-hydroxystearic acid hydrazide, 1,4-cyclohexanedicarboxylic acid dihydrazide, and linoleic dimer acid dihydrazide is disclosed.

These carboxylic acid hydrazides may be used singly or in combination.

Addition of an only small amount of the carboxylic acid hydrazide to a polyacetal resin brings about stabilizing effects far superior to conventional stabilizers, and thus obtained polyacetal resin composition is excellent in moldability (flame retardancy, mold deposit). Moreover, bleeding out (or blooming property) of such an additive from a shaped article formed from the polyacetal resin composition can be significantly improved.

The proportion of the carboxylic acid hydrazide is 0.005 to 2 parts by weight, when generation of formaldehyde can be remarkably inhibited. In the case where the proportion of the carboxylic acid hydrazide is too low, it is difficult to effectively reduce the amount of formaldehyde emission. In the case where the proportion is too high, there is a possibility that moldability or mechanical strength is deteriorated.

The carboxylic acid hydrazide can impart significant stability and processing stability to the polyacetal resin even when the carboxylic acid hydrazide is used alone. Besides, the carboxylic acid hydrazide may be used in combination with at least one member selected from the group consisting of an antioxidant, a processing stabilizer, a heat stabilizer, a weather (light)-resistant stabilizer, an impact resistance improver, a slip-improving agent, a coloring agent, and a filler.

Incidentally, many of the stabilizers (the antioxidant, the processing stabilizer, the heat stabilizer, and the weather (light)-resistant stabilizer) have an ester bond [-C(=O)O-] as a structural unit in a molecule thereof. The carboxylic acid hydrazide can stabilize the polyacetal resin even in the case of being used in combination with the stabilizer having such an ester bond. However, since the carboxylic acid hydrazide potentially has reactivity to an ester bond, the preferred stabilizer is a compound free from an ester bond as a structural unit in a molecule thereof in order to have an effect for inhibiting formaldehyde emission in a smaller amount of the carboxylic acid hydrazide.

### (Antioxidant)

The antioxidant may include a hindered phenol-series compound, and a hindered amine-series compound, and others.

The hindered phenol-series compound may include a conventional phenol-series antioxidant or stabilizer, for example, a monocyclic hindered phenolic compound (e.g., 2,6-di-t-butyl-p-cresol), a polycyclic hindered phenolic compound in which rings are connected or bonded to each other through a hydrocarbon group or a group containing a sulfur atom [e.g., a C₁₋₁₀alkylene-bis to tetrakis(t-butylphenol) such as 2,2'-methylenebis(4-methyl-6-t-butylphenol), 4,4'-methylenebis(2,6-di-t-butylphenol) or 1,1,3-tris(2-methyl-4-hydroxy-5-t-butylphenyl)butane; a C₂₋₁₀alkenylene or dienylene-bis to tetrakis(t-butylphenol) such as 4,4'-butylidenebis(3-methyl-6-t-butylphenol); a C₆₋₂₀arylene or aralkylene-bis to tetrakis(t-butylphenol) such as 1,3,5-trimethyl-2,4,6-tris(3,5-di-t-butyl-4-hydroxybenzyl)benzene; and a bis(t-butylphenol) in which t-butylphenol groups are connected or bonded to each other through a group having a sulfur atom, for example, 4,4'-thiobis(3-methyl-6-t-butylphenol)], a hindered phenolic compound having an ester group or an amide group [e.g., a t-butylphenol having a C₂₋₁₀alkylenecarbonyloxy group, exemplified by n-octadecyl-3-(4'-hydroxy-3',5'-di-t-butylphenyl)propionate or n-octadecyl-2-(4'-hydroxy-3',5'-di-t-butylphenyl)propionate; a bis to tetrakis(t-butylphenol) in which t-butylphenol groups are connected or bonded to each other through a polyol ester of a fatty acid, exemplified by 1,6-hexanediol-bis[3-(3,5-di-t-butyl-4-hydroxyphenyl)propionate], triethylene glycol-bis[3-(3-t-butyl-5-methyl-4-hydroxyphenyl)propionate] or pentaerythritol tetrakis[3-(3,5-di-t-butyl-4-hydroxyphenyl)propionate] ; a bis to tetrakis(t-butylphenol) having a heterocyclic group and a C₂₋₁₀alkylenecarbonyloxy group, exemplified by 3,9-bis[2-{3-(3-t-butyl-4-hydroxy-5-methylphenyl)propionyloxy}-1,1-dimethylethyl]-2,4,8,10-tetraoxaspiro[5.5]undecane; a t-alkylphenol (e.g., t-butylphenol, and t-pentylphenol) having a C₃₋₁₀alkenylcarbonyloxy group, exemplified by 2-t-butyl-6-(3'-t-butyl-5'-methyl-2'-hydroxybenzyl)-4-methylphenylacrylate or 2-[1-(2-hydroxy-3,5-di-t-pentylphenyl)ethyl]-4,6-di-t-pentylphenylacrylate; a hindered phenolic compound having a phosphonic ester group, exemplified by di-n-octadecyl-3,5-di-t-butyl-4-hydroxybenzylphosphona te; a hindered phenolic compound having an amide unit, exemplified by N,N'-hexamethylenebis(3,5-di-t-butyl-4-hydroxy-dihydrocinnamamide), N,N'-ethylenebis[3-(3,5-di-t-butyl-4-hydroxyphenyl)propionamide], N,N'-tetramethylenebis[3-(3,5-di-t-butyl-4-hydroxyphenyl)propionamide], N,N'-hexamethylenebis[3-(3,5-di-t-butyl-4-hydroxyphenyl)propionamide], N,N'-ethylenebis[3-(3-t-butyl-5-methyl-4-hydroxyphenyl)propionamide], N,N'-hexamethylenebis[3-(3-t-butyl-5-methyl-4-hydroxyphenyl)propionamide], N,N'-bis[3-(3,5-di-t-butyl-4-hydroxyphenyl)propionyl]hydrazine, N,N'-bis[3-(3-t-butyl-5-methyl-4-hydroxyphenyl)propionyl]hydrazine, 1,3,5-tris(3,5-di-t-butyl-4-hydroxybenzyl)isocyanurate, or 1,3,5-tris(4-t-butyl-3-hydroxy-2,6-dimethylbenzyl)isocyanurate], and others. Among them, a phenolic compound having a t-butyl group (particularly, a plurality of t-butyl groups), in particular, a compound having a plurality of t-butylphenol sites, is preferred. These hindered phenol-series compounds may be used singly or in combination.

The hindered amine-series compound may include a piperidine derivative having a steric hindrance group, for example, an ester group-containing piperidine derivative [for example, an aliphatic acyloxypiperidine (e.g., a C₂₋₂₀aliphatic acyloxy-tetramethylpiperidine) such as 4-acetoxy-2,2,6,6-tetramethylpiperidine, 4-stearoyloxy-2,2,6,6-tetramethylpiperidine or 4-acryloyloxy-2,2,6,6-tetramethylpiperidine; an aromatic acyloxypiperidine (e.g., a C₇₋₁₁aromatic acyloxy-tetramethylpiperidine) such as 4-benzoyloxy-2,2,6,6-tetramethylpiperidine; an aliphatic di-ortricarboxylicacid-bis-ortrispiperidylester(e.g., a C₂₋₂₀ aliphatic dicarboxylic acid-bispiperidyl ester) such as bis(2,2,6,6-tetramethyl-4-piperidyl)oxalate, bis(2,2,6,6-tetramethyl-4-piperidyl)malonate, bis(2,2,6,6-tetramethyl-4-piperidyl)adipate, bis(1,2,2,6,6-pentamethyl-4-piperidyl)adipate, bis(2,2,6,6-tetramethyl-4-piperidyl)sebacate, bis(1,2,2,6,6-pentamethyl-4-piperidyl)sebacate; an aromatic di- to tetracarboxylic acid-bis- to tetrakispiperidyl ester (e.g., an aromatic di- or tricarboxylic acid-bis- or trispiperidyl ester) such as bis(2,2,6,6-tetramethyl-4-piperidyl)terephthalate or tris(2,2,6,6-tetramethyl-4-piperidyl)benzene-1,3,5-tricarboxylate], an ether group-containing piperidine derivative [for example, a C₁₋₁₀alkoxypiperidine (e.g., a C₁₋₆alkoxy-tetramethylpiperidine) such as 4-methoxy-2,2,6,6-tetramethylpiperidine; a C₅₋₈cycloalkyloxy-piperidine such as 4-cyclohexyloxy-2,2,6,6-tetramethylpiperidine; an aryloxypiperidine such as 4-phenoxy-2,2,6,6-tetramethylpiperidine; a C₆₋₁₀aryl-C₁₋₄alkyloxy-piperidine such as 4-benzyloxy-2,2,6,6-tetramethylpiperidine; or an alkylenedioxybispiperidine (e.g., a C₁₋₁₀alkylenedioxy-bispiperidine) such as 1,2-bis(2,2,6,6-tetramethyl-4-piperidyloxy)ethane], an amide group-containing piperidine derivative [for example, a carbamoyloxypiperidine such as 4-(phenylcarbamoyloxy)-2,2,6,6-tetramethylpiperidine; an alkylenedioxy-bis piperidine substituted with a carbamoyloxy group, e.g., bis(2,2,6,6-tetramethyl-4-piperidyl)hexamethylene-1,6-dicarbamate]. Moreover, the hindered amine-series compound may also include, for example, a polycondensate of piperidine derivatives having a high molecular weight (e.g., a polycondensate of dimethyl succinate and 1-(2-hydroxyethyl)-4-hydroxy-2,2,6,6-tetramethylpiperidine, and a poly{6-[(1,1,3,3-tetramethylbutyl)imino-1,3,5-triazin-2,4-diyl][2-(2,2, 6,6-tetramethylpiperidyl)amino]hexamethylene[4-(2,2,6, 6-tetramethylpiperidyl)imino]}). These hindered amine-series compounds may be used singly or in combination.

These antioxidants may be used singly or in combination. The proportion of the antioxidant is 0.01 to 2 parts by weight, relative to 100 parts by weight of the polyacetal resin.

### (Processing stabilizer)

The processing stabilizer may include at least one member selected from the group consisting of (a) a long-chain fatty acid or a derivative thereof, (b) a polyoxyalkylene glycol, (c) a silicone compound, and others.

### (a) Long-chain or higher fatty acid or derivative thereof

The long-chain or higher fatty acid may be a saturated fatty acid or an unsaturated fatty acid. Moreover, a part of hydrogen atoms in the higher fatty acid may be substituted with a substituent(s) such as hydroxyl group. Such a higher fatty acid may be exemplified by a mono- or di-fatty acid having not less than 10 carbon atoms, for example, a saturated mono-fatty acid having not less than 10 carbon atoms [e.g., a saturated C₁₀₋₃₄ fatty acid (preferably a saturated C₁₀₋₃₀ fatty acid) such as capric acid, lauric acid, myristic acid, pentadecylic acid, palmitic acid, stearic acid, arachic acid, behenic acid or montanic acid], an unsaturated mono-fatty acid having not less than 10 carbon atoms [e.g., an unsaturated C₁₀₋₃₄ fatty acid (preferably an unsaturated C₁₀₋₃₀ fatty acid) such as oleic acid, linoleic acid, linolenic acid, arachidonic acid or erucic acid], a di-fatty acid having not less than 10 carbon atoms (a dibasic fatty acid) [e.g., a saturated C₁₀₋₃₀ di-fatty acid (preferably a saturated C₁₀₋₂₆ di-fatty acid) such as sebacic acid, dodecanedioic acid, tetradecanedioic acid or thapsiaic acid (or thapsic acid), and an unsaturated C₁₀₋₃₀ di-fatty acid (preferably an unsaturated C₁₀₋₂₆ di-fatty acid) such as decenedioic acid or dodecenedioic acid], and others. The fatty acid also includes one which has one or a plurality of hydroxyl group(s) in the molecular (e.g., a hydroxy-saturated C₁₀₋₂₆ fatty acid such as 12-hydroxy stearic acid). These fatty acids may be used singly or in combination. Among these fatty acids, a saturated or unsaturated C₁₀₋₂₆ mono-fatty acid, and a saturated or unsaturated C₁₀₋₂₀ di-fatty acid are preferred.

The derivative of the higher fatty acid may include, for example, a fatty acid ester, a fatty acid amide, and others. As to the fatty acid ester, there is no particular limitation on its structure, and an ester of either a straight or branched chain fatty acid can be used. As the higher fatty acid ester, there may be mentioned, for example, an ester of the above-mentioned higher fatty acid with an alcohol (e.g., an ester having one or a plurality of ester bond(s), such as a monoester, a diester, a triester, or tetraester). The alcohol constituting the higher fatty acid ester is not particularly limited to a specific one. Such an alcohol may be a monohydric alcohol. As such an alcohol, a polyhydric alcohol is usually employed in many cases.

The polyhydric alcohol may include a polyhydric alcohol having about 2 to 8 carbon atoms (preferably, about 2 to 6 carbon atoms) or a polymer thereof, for example, a diol exemplified by an alkylene glycol [e.g., a C₂₋₈alkylene glycol (preferably a C₂₋₆alkylene glycol) such as ethylene glycol, diethylene glycol or propylene glycol]; a triol exemplified by glycerin, trimethylolpropane, or a derivative thereof; a tetraol exemplified by pentaerythritol, sorbitan, or a derivative thereof; as well as a homo- or copolymer of the polyhydric alcohol(s) [e.g., a homo- or copolymer of a polyoxyalkylene glycol such as a polyethylene glycol or a polypropylene glycol, a polyglycerin, dipentaerythritol, and a polypentaerythritol]. The average degree of polymerization of the polyoxyalkylene glycol is not less than 2 (e.g., about 2 to 500), preferably about 2 to 400 (e.g., about 2 to 360), and more preferably not less than 16 (e.g., about 20 to 200). Incidentally, in the case of using the polyoxyalkylene glycol as a polyhydric alcohol, it is preferred to use, as a long-chain (or higher) fatty acid constituting the ester, a fatty acid having not less than 12 carbon atoms, for example, a saturated or unsaturated C₁₂₋₂₆ mono-fatty acid, and a saturated or unsaturated C₁₂₋₂₀ di-fatty acid. The alcohols may be used singly or in combination.

Examples of such an ester of a long-chain or higher fatty acid may include ethylene glycol mono- or dipalmitate, ethylene glycol mono- or distearate, ethylene glycol mono-or dibehenate, ethylene glycol mono- or dimontanate, glycerin mono- to tripalmitate, glycerin mono- to tristearate, glycerin mono- to tribehenate, glycerin mono-to trimontanate, pentaerythritol mono- to tetrapalmitate, pentaerythritol mono- to tetrastearate, pentaerythritol mono- to tetrabehenate, pentaerythritol mono- to tetramontanate, a polyglycerin tristearate, trimethylolpropane monopalmitate, pentaerythritol monoundecylate, sorbitan monostearate, a mono- or dilaurate of a polyalkylene glycol (such as a polyethylene glycol or a polypropylene glycol), a mono- or dipalmitate of the polyalkylene glycol, a mono- or distearate of the polyalkylene glycol, a mono- or dibehenate of the polyalkylene glycol, a mono- or dimontanate of the polyalkylene glycol, a mono- or dioleate of the polyalkylene glycol, and a mono- or dilinolate of the polyalkylene glycol.

Among these derivatives, as the fatty acid amide, for example, an acid amide (e.g., a monoamide and a bisamide) of the higher fatty acid (a higher mono- or di-fatty acid) with an amine (such as a monoamine, a diamine or a polyamine) may be used. Among the acid amide, a bisamide is particularly preferred.

As the monoamide, there may be mentioned, for example, a primary acid amide of a saturated fatty acid (such as capric acid amide, lauric acid amide, myristic acid amide, palmitic acid amide, stearic acid amide, arachic acid amide, behenic acid amide or montanic acid amide); a primary acid amide of an unsaturated fatty acid (such as oleic acid amide); and a secondary acid amide of a saturated and/or an unsaturated fatty acid with a monoamine (such as stearyl stearic acid amide or stearyl oleic acid amide).

The bisamide may include, for example, a bisamide of the fatty acid with a C₁₋₆alkylenediamine (particularly, a C₁₋₂alkylenediamine). The concrete examples of the bisamide may include ethylenediamine-dipalmitic acid amide, ethylenediamine-distearic acid amide (ethylene bis-stearyl amide), hexamethylenediamine-distearic acid amide, ethylenediamine-dibehenic acid amide, ethylenediamine-dimontanic acid amide, ethylenediamine-dioleic acid amide, and ethylenediamine-dierucic acid amide. Furthermore, a bisamide in which different species of acyl groups are independently bonded to amine sites of an alkylenediamine, such as ethylenediamine-(stearic acid amide)oleic acid amide, may also be used. In the acid amide, it is preferred that the fatty acid constituting the acid amide is a saturated fatty acid.

These long-chain (or higher) fatty acid amides or derivatives thereof may be used singly or in combination.

### (b) Polyoxyalkylene glycol

The polyoxyalkylene glycol may include a homo- or copolymer of an alkylene glycol [e.g., a C₂₋₆alkylene glycol such as ethylene glycol, propylene glycol, or tetramethylene glycol (preferably a C₂₋₄alkylene glycol)], and a derivative thereof.

Specific examples of the polyoxyalkylene glycol may include a polyC₂₋₆oxyalkylene glycol such as a polyethylene glycol, a polypropylene glycol or a polytetramethylene glycol (preferably a polyC₂₋₄oxyalkylene glycol), a copolymer such as a polyoxyethylene-polyoxypropylene copolymer (e.g., a random or block copolymer), a polyoxyethylene-polyoxypropylene glyceryl ether, or a polyoxyethylene-polyoxypropylene monobutyl ether, and others. Among them, the preferred one includes a polymer having an oxyethylene unit, for example, a polyethylene glycol, a polyoxyethylene-polyoxypropylene copolymer, and a derivative thereof.

The number average molecular weight of the polyoxyalkylene glycol is about 3 x 10² to 1 x 10⁶ (e.g., about 5 x 10² to 5 x 10⁵), and preferably about 1 x 10³ to 1 x 10⁵ (e.g., about 1 x 10³ to 5 x 10⁴). The polyoxyalkylene glycols may be used singly or in combination.

### (c) Silicone-series compound

The silicone-series compound may include a (poly)organosiloxane, and others. Examples of the (poly)organosiloxane may include, a monoorganosiloxane such as a dialkylsiloxane (e.g., dimethylsiloxane), an alkylarylsiloxane (e.g., phenylmethylsiloxane) or a diarylsiloxane (e.g., diphenylsiloxane), a homopolymer thereof (for example, a polydimethylsiloxane, and a polymethylphenylsiloxane), or a copolymer thereof. Incidentally, the polyorganosiloxane may be an oligomer.

Moreover, the (poly)organosiloxane may include a modified (poly)organosiloxane (e.g., a modified silicone) having substituent(s) (such as an epoxy group, a hydroxyl group, an alkoxy group, a carboxyl group, an amino group or a substituted amino group (e.g., a dialkylamino group), an ether group, a vinyl group, or a (meth) acryloyl group) in the end or main chain of the molecule. These silicone-series compounds may be used singly or in combination.

The proportion of the processing stabilizer is 0.03 to 3 parts by weight, relative to 100 parts by weight of the polyacetal resin. In particular, the proportion may be 0.03 to 2 parts by weight.

### (Heat stabilizer)

The heat stabilizer may include (a) a basic nitrogen-containing compound, (b) a metal salt of an organic carboxylic acid, (c) an alkali or alkaline earth metal compound, (d) a hydrotalcite , (e) a zeolite, (f) a phosphine compound, and others.

### (a) Basic nitrogen-containing compound

As the basic nitrogen-containing compound (or basic nitrogen compound), at least one member selected from the group consisting of an aminotriazine compound, a guanidine compound, a urea compound, an amino acid compound, an amino alcohol compound, an imide compound and an amide compound, may be used.

The aminotriazine compound may include melamine or a derivative thereof [e.g., melamine, and a condensate of melamine (melam, melem, melon)], guanamine or a derivative thereof, and an aminotriazine resin [for example, a co-polycondensation resin of melamine (e.g., a melamine-formaldehyde resin, a phenol-melamine resin, a melamine-phenol-formaldehyde resin, a benzoguanamine-melamine resin, and an aromatic polyamine-melamine resin), and a co-polycondensation resin of guanamine (e.g., a benzoguanamine-formaldehyde resin, and a benzoguanamine-phenol-formaldehyde resin)].

Among the aminotriazine compounds, the derivative of guanamine may include an aliphatic guanamine compound [for example, a monoguanamine (e.g., a C₁₋₂₄alkyl-substituted guanamine such as valeroguanamine, caproguanamine, heptanoguanamine, capryloguanamine, or stearoguanamine), and an alkylenebisguanamine (e.g., a C₁₋₂₄alkylenebisguanamine such as succinoguanamine, glutaroguanamine, adipoguanamine, pimeloguanamine, suberoguanamine, azeloguanamine, or sebacoguanamine)], an alicyclic guanamine-series compound [for example, a monoguanamine (e.g., cyclohexanecarboguanamine, norbornenecarboguanamine, cyclohexenecarboguanamine, norbornanecarboguanamine, and a compound obtained by introducing a functional group thereto (e.g., a derivative whose cycloalkane residue has one to three functional group(s) as a substituent, such as an alkyl group, a hydroxy group, an amino group, an acetoamino group, a nitryl group, a carboxyl group, an alkoxycarbonyl group, a carbamoyl group, an alkoxy group, a phenyl group, a cumyl group or a hydroxyphenyl group))], an aromatic guanamine-series compound [for example, a monoguanamine (e.g., benzoguanamine and a compound obtained by introducing a functional group thereto (e.g., a benzoguanamine derivative whose phenyl residue has one to five functional group(s) as a substituent, such as an alkyl group, an aryl group, a hydroxy group, an amino group, an acetoamino group, a nitryl group, a carboxyl group, an alkoxycarbonyl group, a carbamoyl group, an alkoxy group, a phenyl group, a cumyl group or a hydroxyphenyl group: for example, o-, m- or p-toluguanamine, o-, m- or p-xyloguanamine, o-, m- or p-phenylbenzoguanamine, o-, m- or p-hydroxybenzoguanamine, 4-(4'-hydroxyphenyl)benzoguanamine, o-, m- or p-nitrylbenzoguanamine, 3,5-dimethyl-4-hydroxybenzoguanamine, and 3,5-di-t-butyl-4-hydroxybenzoguanamine), α- or β-naphthoguanamine and a derivative obtained by introducing a functional group thereto, a polyguanamine (e.g., phthaloguanamine, isophthaloguanamine, terephthaloguanamine, naphthalenediguanamine, and biphenylenediguanamine), and an aralkyl- or aralkyleneguanamine (e.g., phenylacetoguanamine, β-phenylpropioguanamine, and o-, m- or p-xylylenebisguanamine))], a hetero atom-containing guanamine-series compound [for example, an acetal group-containing guanamine (e.g., 2,4-diamino-6-(3,3-dimethoxypropyl-s-triazine), a dioxane ring-containing guanamine {e.g., [2-(4',6'-diamino-s-triazin-2'-yl)ethyl]-1,3-dioxane, [2-(4',6'-diamino-s-triazin-2'-yl)ethyl]-4-ethyl-4-hydroxymethyl-1,3-dioxane}, a tetraoxospiro ring-containing guanamine (e.g., CTU-guanamine, and CMTU-guanamine), an isocyanuric ring-containing guanamine (e.g., 1,3,5-tris[2-(4',6'-diamino-s-triazin-2'-yl)ethyl]isocyanurate, and 1,3,5-tris[3-(4',6'-diamino-s-triazin-2'-yl)propyl]isocyanurate), an imidazole ring-containing guanamine (e.g. , guanamine compounds described in Japanese Patent Application Laid-Open Nos. 41120/1972 (JP-47-41120A)), and guanamine compounds described in Japanese Patent Application Laid-Open No. 154181/2000 (JP-2000-154181A)). Moreover, the aminotriazine compound may also include, for example, a compound which has alkoxymethyl group(s) on amino group(s) of the melamine, melamine derivative or guanamine-series compound [e.g., a mono- to hexamethoxymethylmelamine, a mono- to tetramethoxy methyl benzoguanamine, and a mono to octamethoxymethyl-CTU-guanamine].

The guanidine compound may include, for example, a non-cyclic guanidine (e.g., glycocyamine, guanolin, guanidine, and cyanoguanidine), a cyclic guanidine (e.g., a glycocyamidine compound such as glycocyamidine, or creatinine; and oxalylguanidine or a cyclic guanidine having a similar structure thereto, such as oxalylguanidine or 2,4-diiminoparabanic acid); an imino group-substituted urazole compound (e.g., iminourazole, and guanazine); an isocyanuric acid imide (e.g., isoammelide, and isoammeline); malonylguanidine, tartronylguanidine; mesoxalylguanidine; and others.

The urea compound may include, for example, a non-cyclic urea compound [for example, urea, an N-substituted urea having a substituent such as an alkyl group, a non-cyclic urea condensate (e.g., a polymer of urea, such as biuret, or biurea; and a condensate compound of urea and an aldehyde compound, such as methylenediurea or ureaform), a cyclic urea compound [for example, a cyclic monoureide, e.g., a C₁₋₁₀alkyleneurea (e.g., ethyleneurea, and crotonylideneurea), an aryleneurea (e.g., imesatin), a ureide of a dicarboxylic acid (e.g., parabanic acid, barbituric acid, isocyanuric acid, and uramil), a ureide of a β-aldehydic acid (e.g., uracil, thymine, and urazole), a ureide of an α-hydroxy acid (for example, a hydantoin compound, e.g., hydantoin; a 5-straight or branched chain C₁₋₆alkyl-hydantoin such as 5-methylhydantoin; a 5-C₆₋₁₀arylhydantoin which may have a substituent (such as hydroxyl group or amino group) on an aryl group thereof, such as 5-phenylhydantoin, 5-(o-, m-, or p-hydroxyphenyl)hydantoin, or 5-(o-, m-, or p-aminophenyl)hydantoin; a 5-C₆₋₁₀arylC₁₋₄alkyl-hydantoin such as 5-benzylhydantoin; a 5,5-di-straight or branched chain C₁₋₆alkyl-hydantoin such as 5,5-dimethylhydantoin; a 5-straight or branched chain C₁₋₆alkyl-5-C₆₋₁₀arylhydantoin such as 5-methyl-5-phenylhydantoin; a 5,5-diC₆₋₁₀arylhydantoin such as 5,5-diphenylhydantoin; a 5,5-bis(C₆₋₁₀arylc₁₋₄alkyl)hydantoin such as 5,5-dibenzylhydantoin; a C₁₋₁₀alkylene-bishydantoin such as pentamethylenebishydantoin; and allantoin or a metal salt thereof (e.g., an Al salt such as allantoin dihydroxyaluminum salt)); a cyclic diureide, for example, uric acid, an alkyl-substituted uric acid, acetyleneurea (glycoluril) or a derivative thereof (e.g. a mono- to tetra(C₁₋₄alkoxyC₁₋₄alkyl)glycoluril), crotylidenediurea, a diureide of an α-hydroxy acid (e.g., 1,1-methylenebis(5,5-dimethylhydantoin)), a diurea such as p-urazine, and a diureide of a dicarboxylic acid (e.g., alloxantin, and purpuric acid)].

Examples of the amino acid may include an α-amino acid [for example, a monoaminomonocarboxylic acid (e.g., glycine, alanine, valin, norvalin, leucine, norleucine, isoleucine, phenylalanine, tyrosine, diiodotyrosine, surinamine, threonine, serine, proline, hydroxyproline, tryptophan, methionine, cystine, cysteine, citrulline, α-aminobutyric acid, hexahydropicolinic acid, teanine, and o- or m-tyrosine), a monoaminodicarboxylic acid (e.g., aspartic acid, glutamic acid, asparagine, glutamine, hexahydrodipicolinic acid, and hexahydroquinolinic acid), and a diaminomonocarboxylic acid (e.g., lysine, hydroxylysine, arginine, and histidine)], a β-amino acid (e.g., β-alanine, β-aminobutyric acid, and hexahydrocinchomeronic acid), a γ-amino acid (e.g., γ-aminobutyric acid), a δ-amino acid (e.g., δ-amino-n-valeric acid), and others. Incidentally, these amino acids may be in a D-, L-, or DL-form. The amino acid may also include an amino acid derivative in which a carboxyl group is subjected to metal salination (e.g., an alkali metal salt, an alkaline earth metal salt), amidation, hydrazidation, or esterification (e.g., methyl esterification, ethyl esterification).

The amino alcohol compound may include an aminoC₁₋₁₀aliphatic mono- or polyol such as monoethanolamine, diethanolamine, 2-amino-1-butanol, 2-amino-2-methyl-1-propanol, 2-amino-2-methyl-1,3-propanediol, 2-amino-2-ethyl-1,3-propanediol, or tris(hydroxymethyl)aminomethane.

Examples of the imide compound may include an aromatic polycarboxylic acid imide such as phthalic acid imide, trimellitic acid imide, or pyromellitic acid imide, and others.

The amide compound may include, for example, an aliphatic carboxylic acid amide (e.g. , malonamide, adipic acid amide, sebacic acid amide, and dodecanedioic acid amide), a cyclic carboxylic acid amide (e.g., ε-caprolactam), an aromatic carboxylic acid amide (e. g. , benzoic acid amide, o-, m- or p-aminobenzamide, isophthalic acid diamide, and terephthalic acid amide), a polyamide-series resin [for example, a nylon 3 (a poly-β-alanine), a nylon 46, a nylon 6, a nylon 66, a nylon 11, a nylon 12, a nylon MXD6, a nylon 6-10, a nylon 6-11, a nylon 6-12, a nylon 6-66-610, and a nylon 9T], a polyester amide, a polyamide imide, a polyurethane, a homo- or copolymer of a poly(meth)acrylic acid amide which may be crosslinked [e.g., polymers described in US Patent No. 5011890], a homo- or copolymer of a poly(vinyllactam) [for example, a homo- or copolymer of a poly(N-vinylpyrrolidone) (e.g., homo- or copolymers described in Japanese Patent Application Laid-Open No. 52338/1980 (JP-55-52338A), and US Patent No. 3204014)], a poly(N-vinylcarboxylic acid amide), a copolymer of N-vinylcarboxylic acid amide and another vinyl monomer (e.g., homo-or copolymers described in Japanese Patent Application Laid-Open Nos. 247745/2001 (JP-2001-247745A), 131386/2001 (JP-2001-131386A), 311302/1996 (JP-8-311302A) and 86614/1984 (JP-59-86614A), US Patent Nos. 5455042, 5407996 and 5338815), and others.

It is disclosed that a hydrazine compound may include a carboxylic acid hydrazide different from the above-mentioned long-chain aliphatic carboxylic acid hydrazide, alicyclic carboxylic acid hydrazide, and dimer acid or trimer acid hydrazide. Examples of such a carboxylic acid hydrazide may include a short-chain aliphatic carboxylic acid hydrazide [e.g., a C₂₋₁₄saturated or unsaturated fatty acid hydrazide such as adipic acid dihydrazide, lauric acid hydrazide, sebacic acid dihydrazide, dodecanedioic acid dihydrazide, or sorbic acid hydrazide (preferably a C₂₋₁₂saturated or unsaturated fatty acid hydrazide); and a C₂₋₁₄oxy-fatty acid hydrazide such as α-oxybutyric acid hydrazide, or glyceric acid hydrazide (preferably a C₂₋₁₂oxy-fatty acid hydrazide)], an aromatic carboxylic acid hydrazide (for example, benzoic acid hydrazide, phthalic acid dihydrazide, isophthalic acid dihydrazide, terephthalic acid dihydrazide, and in addition, an aromatic oxycarboxylic acid hydrazide, e.g., p-hydroxybenzoic acid hydrazide, and salicylic acid hydrazide), and others.

### (b) Metal salt of organic carboxylic acid

The metal salt of the organic carboxylic acid may include, for example, a salt of an organic carboxylic acid with a metal (e.g., an alkali metal such as Li, Na or K; an alkaline earth metal such as Mg or Ca; and a transition metal such as Zn).

The organic carboxylic acid may be a compound of low molecular weight or a compound of high molecular weight. As the organic carboxylic acid, there may be used a saturated or unsaturated lower aliphatic carboxylic acid having less than 10 carbon atoms, and a polymer of an unsaturated aliphatic carboxylic acid, in addition to a saturated or unsaturated higher aliphatic carboxylic acid exemplified in item of the higher fatty acid. Moreover, these aliphatic carboxylic acids may have a hydroxyl group. The saturated lower aliphatic carboxylic acid may include a saturated C₁₋₉monocarboxylic acid (e.g., acetic acid, propionic acid, butyric acid, isobutyric acid, valeric acid, isovaleric acid, pivalic acid, caproic acid, and caprylic acid), a saturated C₂₋₉dicarboxylic acid (e.g. , oxalic acid, malonic acid, succinic acid, glutaric acid, adipic acid, pimelic acid, cork acid, and azelaic acid), and a hydroxy acid thereof (e.g., glycolic acid, lactic acid, glyceric acid, hydroxybutyric acid, and citric acid).

The unsaturated lower aliphatic carboxylic acid may include, for example, an unsaturated C₃₋₉monocarboxylic acid [e.g., (meth)acrylic acid, crotonic acid, and isocrotonic acid], an unsaturated C₄₋₉dicarboxylic acid (e.g., maleic acid, and fumaric acid), and a hydroxy acid thereof (e.g., propiolic acid).

Moreover, exemplified as the polymer of the unsaturated aliphatic carboxylic acid may be a copolymer of a polymerizable unsaturated carboxylic acid [for example, an α,β-ethylene-type (ethylenic) unsaturated carboxylic acid, for example, a polymerizable unsaturated monocarboxylic acid (such as (meth)acrylic acid), a polymerizable unsaturated polycarboxylic acid (such as itaconic acid, maleic acid, or fumaric acid), an acid anhydride of the polycarboxylic acid, or a monoester of the polycarboxylic acid (e.g., a monoC₁₋₁₀alkyl ester of the polycarboxylic acid such as monoethyl maleate)] with an olefin (e.g., an α-C₂₋₁₀olefin such as ethylene or propylene).

These metal salts of the organic carboxylic acids may be used singly or in combination.

The preferred metal salt of the organic carboxylic acid may include a salt of an organic carboxylic acid with an alkali metal (e.g., lithium citrate, potassium citrate, sodium citrate, lithium stearate, and lithium 12-hydroxystearate), a salt of an organic carboxylic acid with an alkaline earth metal (e.g., magnesium acetate, calcium acetate, magnesium citrate, calcium citrate, calcium stearate, magnesium stearate, magnesium 12-hydroxystearate, and calcium 12-hydroxystearate), an ionomer resin (a resin in which at least a part of carboxyl groups contained in the copolymer of the polymerizable unsaturated polycarboxylic acid with the olefin is neutralized with an ion of the metal, and others. The ionomer resin is, for example, commercially available as ACLYN (manufactured by Allied Signal Inc.), Himilan (manufactured by Du Pont-Mitsui Polychemicals Co., Ltd.), Surlyn (manufactured by Du Pont), and others.

Among the metal salts, in view of stabilizing effects, a salt with an alkaline earth metal such as calcium citrate, magnesium stearate, calcium stearate, magnesium 12-hydroxystearate, or calcium 12-hydroxystearate (particularly, calcium citrate) is preferred.

### (c) Alkali or alkaline earth metal compound

The alkali or alkaline earth metal compound may include an inorganic compound exemplified by a metal oxide (such as CaO, or MgO), a metal hydroxide (such as LiOH, Ca(OH)₂, or Mg(OH)₂), and a salt of an inorganic acid with a metal [e.g., a salt of an inorganic acid (such as a salt of carbonic acid with a metal (such as Li₂CO₃, Na₂CO₃, K₂CO₃, CaCO₃ or MgCO₃), aborate, and a phosphate)]. In particular, the metal oxide and the metal hydroxide are preferred. Moreover, among the compounds, the alkaline earth metal compound is preferred.

These alkali or alkaline earth metal compounds may be used singly or in combination.

### (d) Hydrotalcite

As the hydrotalcite, hydrotalcites recited in Japanese Patent Application Laid-Open No. 1241/1985 (JP-60-1241A) and Japanese Patent Application Laid-Open No. 59475/1997 (JP-9-59475A), such as hydrotalcite compounds represented by the following formula are usable.

[M²⁺₁₋ₓM³⁺ₓ(OH)₂]^{x+}[Aⁿ⁻ _{x/n} · mH₂O]^{x-}

In the formula, M²⁺ represents Mg²⁺, Mn²⁺, Fe²⁺, Co²⁺, or any of other divalent metal ions; M³⁺ represents Al³⁺, Fe³⁺, Cr³⁺, or any of other trivalent metal ions; Aⁿ⁻ represents CO₃²⁻, OH⁻, HPO₄²⁻, SO₄²⁻, or any of other n-valent anions (particularly, monovalent or divalent anion); x is 0< x <0.5; and m is 0 ≤ m <1.
These hydrotalcites may be used singly or in combination.

Incidentally, the hydrotalcite is available from Kyowa Chemical Industry Co., Ltd. under the trade name "DHT-4A", "DHT-4A-2", or "Alcamizer".

### (e) Zeolite

The zeolite is not particularly limited to a specific one, and a zeolite other than H-type zeolite can be employed, for example, a zeolite recited in Japanese Patent Application Laid-Open No. 62142/1995 (JP-7-62142A) [zeolites the smallest unit cell of which is a crystalline aluminosilicate with an alkaline and/or alkaline earth metal (A-, X-, Y-, L-, and ZSM-type zeolites, mordenite-type zeolite;chabazite,mordenite,faujasite,and other natural zeolites)].

These zeolites may be used singly or in combination.

Incidentally, A-type zeolite is available as "ZEOLAM-series (A-3, A-4, A-5)", "ZEOSTAR-series (KA-100P, NA-100P, CA-100P)" or others, X-type zeolite as "ZEOLAM-series (F-9)", "ZEOSTAR-series (NX-100P)" or others, and Y-type zeolite as "HSZ-series (320NAA)" or others, from Tosoh Corp. or Nippon Chemical Industrial Co., Ltd.

### (f) Phosphine compound

Examples of the phosphine compound may include a phosphine compound such as an alkylphosphine (for example, a triC₁₋₁₀alkylphosphine such as triethylphosphine, tripropylphosphine, or tributylphosphine), a cycloalkylphosphine (for example, a triC₅₋₁₂cycloalkylphosphine such as tricyclohexylphosphine), an arylphosphine (for example, a triC₆₋₁₂arylphosphine which may have a substituent (such as an amino group or a C₁₋₄alkyl group), such as triphenylphosphine, p-tolyldiphenylphosphine, di-p-tolylphenylphosphine, tri-m-aminophenylphosphine, tri(2,4-dimethylphenyl)phosphine, tri(2,4,6-trimethylphenyl)phosphine, or tri(o-, m- or p-tolyl)phosphine), an aralkylphosphine (for example, a tri(C₆₋₁₂arylC₁₋₄alkyl)phosphine such as tri(o-, m- or p-anisylphosphine), an arylalkenylphosphine (for example, amono- or diC₆₋₁₂aryl-di- or monoC₂₋₁₀alkenylphosphine such as diphenylvinylphosphine, or allyldiphenylphosphine), an arylaralkylphosphine (for example, a mono- or diC₆₋₁₂aryl-di- or mono(C₆₋₁₂arylC₁₋₄alkyl)phosphine such as p-anisyldiphenylphosphine, or di(p-anisyl)phenylphosphine; and a C₆₋₁₂aryl-(C₆₋₁₂arylC₁₋₄alkyl)phosphine which may have a substituent (such as a C₁₋₁₀alkyl group), such as methylphenyl-p-anisylphosphine), or a bisphosphine compound [for example, a bis(diC₆₋₁₂arylphosphino)C₁₋₁₀alkane such as 1,4-bis(diphenylphosphino)butane], and others. These phosphine compounds may be used singly or in combination.

These heat stabilizers may be used singly or in combination. In particular, in the case of using the basic nitrogen-containing compound in combination with at least one member selected from the group consisting of the metal salt of an organic carboxylic acid, the alkali or alkaline earth metal compound, the hydrotalcite, the zeolite, and the phosphine compound, heat stability can be also imparted to the resin composition at a smaller amount of the heat stabilizer. Incidentally, the resin composition of the present invention can also improve heat stability without substantially containing a phosphorus-containing flame retardant.

The resin composition contains a heat stabilizer, the proportion of the heat stabilizer is 0.01 to 2 parts by weight, relative to 100 parts by weight of the polyacetal resin. Incidentally, among the heat stabilizers, the hydrazine compound (the short-chain aliphatic carboxylic acid hydrazide and the aromatic carboxylic acid hydrazide) is preferably used at a small amount because there is a possibility that too large amount of such a hydrazine compound brings about bleeding out thereof from the polyacetal resin composition or deterioration in processing stability of the resin composition. The proportion of the hydrazine compound may be usually not more than 1 part by weight (e.g., about 0 to 1 part by weight), preferably about 0.001 to 1 part by weight, and more preferably about 0.005 to 0.8 part by weight (e.g., about 0.005 to 0.08 part by weight), relative to 100 parts by weight of the polyacetal resin.

### (Weather (light)-resistant stabilizer)

The weather (light)-resistant stabilizer may include (a) a benzotriazole-series compound, (b) a benzophenone-series compound, (c) an aromatic benzoate-series compound, (d) a cyanoacrylate-series compound, (e) an oxalic anilide-series compound, (f) a hydroxyaryl-1,3,5-triazine-series compound, (g) a hindered amine-series compound, and others.

### (a) Benzotriazole-series compound

Examples of the benzotriazole-series compound may include a benzotriazole compound having an aryl group substituted with a hydroxyl group and a C₁₋₆alkyl group, such as 2-(2'-hydroxy-5'-methylphenyl)benzotriazole, 2-(2'-hydroxy-3',5'-di(t-butyl)phenyl)benzotriazole, 2-(2'-hydroxy-3',5'-di(t-amyl)phenyl)benzotriazole or 2-(2'-hydroxy-3',5'-di-isoamylphenyl)benzotriazole; a benzotriazole compound having an aryl group substituted with a hydroxyl group and an aralkyl (or aryl) group, such as 2-[2'-hydroxy-3',5'-bis(α,α-dimethylbenzyl)phenyl]benz otriazole; a benzotriazole compound having an aryl group substituted with a hydroxyl group and an alkoxy (C₁₋₁₂alkoxy) group, such as 2-(2'-hydroxy-4'-octoxyphenyl)benzotriazole; and others.

Among these benzotriazole-series compounds, the particularly preferred one includes a benzotriazole compound having a C₆₋₁₀aryl (particularly, phenyl) group substituted with a hydroxyl group and a C₃₋₆alkyl group, as well as a benzotriazole compound having an aryl group substituted with a hydroxyl group and a C₆₋₁₀aryl-C₁₋₆alkyl (particularly, phenyl-C₁₋₄alkyl) group.

### (b) Benzophenone-series compound

Exemplified as the benzophenone-series compound may be a benzophenone compound having a plurality of hydroxyl groups (e.g., a di- to tetrahydroxybenzophenone such as 2,4-dihydroxybenzophenone; a benzophenone compound having a hydroxyl group, and an aryl or aralkyl group substituted with a hydroxyl group, such as 2-hydroxy-4-oxybenzylbenzophenone); a benzophenone compound having a hydroxyl group and an alkoxy (C₁₋₁₆alkoxy) group (e.g., 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, and 2-hydroxy-4-methoxy-5-sulfobenzophenone); and others.

Among these benzophenone-series compounds, the benzophenone-series compound preferably includes a benzophenone compound having a hydroxyl group, and a C₆₋₁₀aryl (or C₆₋₁₀aryl-C₁₋₄alkyl) group substituted with a hydroxyl group, particularly one having a hydroxyl group, and a phenyl-C₁₋₄alkyl group substituted with a hydroxyl group.

### (c) Aromatic benzoate-series compound

The aromatic benzoate-series compound may include an alkylarylsalicylate such as p-t-butylphenylsalicylate or p-octylphenylsalicylate (particularly, an alkylphenylsalicylate).

### (d) Cyanoacrylate-series compound

Exemplified as the cyanoacrylate-series compound may be a cyano group-containing diarylacrylate such as 2-ethylhexyl-2-cyano-3,3-diphenylacrylate or ethyl-2-cyano-3,3-diphenylacrylate (particularly, a cyano group-containing diphenylacrylate).

### (e) Oxalic anilide-series compound

The oxalic anilide-series compound may include, for example, an oxalic diamide compound having an aryl group (such as phenyl group) on a nitrogen atom in which the aryl group may have a substituent(s), exemplified by N-(2-ethylphenyl)-N'-(2-ethoxy-5-t-butylphenyl)oxalic diamide, and N-(2-ethylphenyl)-N'-(2-ethoxy-phenyl)oxalic diamide.

(f) Hydroxyaryl-1,3,5-triazine-series compound Examples of the hydroxyaryl-1,3,5-triazine-series compound may include a 2,4-diC₆₋₁₀aryl-6-(mono- or dihydroxyC₆₋₁₀aryl)-1,3,5-triazine [for example, a 2,4-diC₆₋₁₀aryl-6-(mono- or dihydroxyC6-loaryl)-1,3,5-triazine which may have a substituent(s) (such as a C₁₋₁₀alkyl group, a C₁₋₁₈alkoxy group, a C₁₋₁₀alkoxyC₁₋₁₀alkoxy group, a C₆₋₁₀aryloxy group, or a C₆₋₁₀arylC₁₋₆alkoxy group) on an aryl group thereof, e.g., a hydroxyaryltriazine such as 2,4-diphenyl-6-(2-hydroxyphenyl)-1,3,5-triazine, or 2,4-diphenyl-6-(2,4-dihydroxyphenyl)-1,3,5-triazine; a hydroxyalkoxyaryltriazine such as 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-6-(2-hydroxy-4-propoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)- 1,3,5-triazine, or a 2,4-di(p-tolyl or 2',4'-dimethylphenyl)-6-(2-hydroxy-C₁₋₁₆alkoxyphenyl)-1,3, 5-triazine corresponding to each of these 2,4-diphenyl-6-(2-hydroxy-alkoxyphenyl)-1,3,5-triazines; a hydroxyaralkyloxyaryltriazine such as 2,4-diphenyl-6-(2-hydroxy-4-benzyloxyphenyl)-1,3,5-triazine, or 2,4-di(p-tolyl or 2',4'-dimethylphenyl)-6-(2-hydroxy-4-benzyloxyphenyl)-1,3,5-triazine; a hydroxyalkoxyalkoxyaryltriazine such as 2,4-diphenyl-6-(2-hydroxy-4-(2-butoxyethoxy)phenyl)-1,3,5-triazine, or 2,4-di-p-tolyl-6-(2-hydroxy-4-(2-hexyloxyethoxy)phenyl)-1,3,5-triazine; and others. Among these compounds, the hydroxyphenyl-1,3,5-triazine-series compound is preferred.

### (g) Hindered amine-series compound

As the hindered amine-series compound, the hindered amine-series compound as exemplified in the paragraph of the above-mentioned antioxidant may be used.

These weather (light)-resistant stabilizers may be used singly or in combination. The same or different species of the weather (light)-resistant stabilizers may be used in combination.

Incidentally, it is preferred to use the hindered amine-series compound (g) in combination with other weather (light)-resistant stabilizer. In particular, it is preferred to use the benzotriazole-series compound (a) in combination with the hindered amine-series compound (g). The proportion (weight ratio) of the hindered amine-series compound relative to other weather (light)-resistant stabilizer(s) (particularly, the benzotriazole-series compound) [the hindered amine-series compound (g)/other weather (light)-resistant stabilizer(s)] may be, for example, about 0/100 to 80/20, preferably about 10/90 to 70/30, and more preferably about 20/80 to 60/40.

The proportion of the weather (light)-resistant stabilizer is, for example, about 0 to 5 parts by weight (e.g., about 0.01 to 5 parts by weight), preferably about 0.1 to 4 parts by weight, and more preferably about 0.1 to 2 parts by weight, relative to 100 parts by weight of the polyacetal resin.

### (Coloring agent)

As the coloring agent, various dyes or pigments may be used. As the dye, a solvent dye is preferred, and includes, for example, an azo-series dye, an anthraquinone-series dye, a phthalocyanine-series dye or a naphthoquinone-series dye. The pigment may be an inorganic pigment or an organic pigment.

Exemplified as the inorganic pigment may be a titanium-series (titanium-containing) pigment, a zinc-series (zinc-containing) pigment, a carbon black (e.g., a furnace black, a channel black, an acetylene black, and Ketjen black), an iron-series (iron-containing) pigment, a molybdenum-series (molybdenum-containing) pigment, a cadmium-series (cadmium-containing) pigment, a lead-series (lead-containing) pigment, a cobalt-series (cobalt-containing) pigment, and an aluminum-series (aluminum-containing) pigment.

The organic pigment may include an azo-series pigment, an anthraquinone-series pigment, a phthalocyanine-series pigment, a quinacridone-series pigment, a perylene-series pigment, a perinone-series pigment, an isoindoline-series pigment, a dioxazine-series pigment, or a threne-series pigment.

The coloring agent may be used singly, or a plurality of these coloring agents may be used in combination. The use of a coloring agent having a high light-shielding effect [such as a carbon black, a titanium white (a titanium oxide), a phthalocyanine-series pigment, a perylene-series pigment (particularly a carbon black, a perylene-series black pigment)] ensures improvement in weather (light)-resistance of the polyacetal resin composition.

The content of the coloring agent is, for example, about 0 to 5 parts by weight (e.g., about 0.01 to 5 parts by weight), preferably about 0.1 to 4 parts by weight, and more preferably about 0.1 to 2 parts by weight, relative to 100 parts by weight of the polyacetal resin.

To the polyacetal resin composition of the present invention may be optionally added a conventional additive (s) singly or in combination. Examples of the additive may include an antioxidant (e.g., a phosphorus-containing, a sulfur-containing, a hydroquinone-series, and a quinoline-series antioxidant), a specific carboxylic acid (e.g., a carboxylic acid described in Japanese Patent Application Laid-Open No. 239484/2000 (JP-2000-239484A)), an impact resistance improver [e.g. , an acrylic core-shell polymer, a polyurethane-series resin, and a polyester-series resin], a slip-improving agent [e.g., an olefinic polymer, a silicone-series resin, and a fluorine-containing resin], a mold-release agent (releasing agent), a nucleating agent, an antistatic agent, a flame retardant, a foaming agent, a surfactant, an antibacterial agent, an antifungal agent, an aromatic agent, aperfume, various polymers [e.g., an acrylic resin (a homo-or copolymer of a C₁₋₁₀alkyl (meth)acrylate such as a poly(methyl methacrylate)), a polycarbonate-series resin, a polyolefinic elastomer or resin, a polyvinyl alcohol-series resin, and an aliphatic polyester-series resin (e.g., a poly(L-lactic acid), a poly(D-lactic acid), a poly(D/L-lactic acid), a polyglycolic acid, and a copolymer of glycolic acid and lactic acid (e.g., D-, L-or D/L-lactic acid))], a filler, and others.

Moreover, if necessary, the resin composition may be further blended with one or combination of a conventional filler (such as a fibrous, plate-like or particulate filler) to improve properties of the shaped article of the present invention. Examples of the fibrous filler may include an inorganic fiber (e.g., a glass fiber, a carbon fiber, a boron fiber, and a potassium titanate fiber (whisker)), an organic fiber (e.g., an amide fiber), and others. As the plate-like filler, there may be mentioned a glass flake, a mica, a graphite, a variety of metal foil, and others. Examples of the particulate filler may include a metal oxide (e.g., zinc oxide, and alumina), a sulfate (e.g., calcium sulfate, and magnesium sulfate), a carbonate (e.g., calcium carbonate), a glass (e.g., a milled fiber, a glass bead, and a glass balloon), a silicate (e.g., a talc, a kaolin, a silica, a diatomite, a clay, and a wollastonite), a sulfide (e.g., molybdenum disulfide, and tungsten disulfide), a carbide (e.g., graphite fluoride, and silicon carbide), boron nitride, and others.

### (Production process of polyacetal resin composition)

The polyacetal resin composition of the present invention may be a particulate mixture or a molten mixture, and it can be prepared by mixing a polyacetal resin with the specific carboxylic acid hydrazide (the long-chain aliphatic carboxylic acid hydrazide and/or the alicyclic carboxylic acid hydrazide), and if necessary, other additive(s) [e.g., a stabilizer (an antioxidant, a processing stabilizer, a heat stabilizer, a weather (light)-resistant stabilizer), an impact resistance improver, a slip-improving agent, a coloring agent and/or a filler], in a conventional manner. For example, (1) a process comprising feeding all components through a main feed port, kneading and extruding the resulting mixture into pellets with an extruder (e.g., a uniaxial or biaxial extruder), and molding a shaped article from the pellets, (2) a process comprising feeding component(s) (e.g., a polyacetal resin, and the above-mentioned other additive(s)) free from the specific carboxylic acid hydrazide through a main feed port, feeding component(s) containing at least the specific carboxylic acid hydrazide (as other component(s), there may be mentioned a polyacetal resin, the above-mentioned other additive(s), or the like) through a side feed port, kneading and extruding the resulting mixture into pellets with an extruder, and molding a shaped article from the pellets, (3) a process comprising feeding component(s) containing a part of the specific carboxylic acid hydrazide (as other component(s), a polyacetal resin, other additive(s), or the like) through a main feed port and feeding component(s) containing the residual specific carboxylic acid hydrazide, and, if necessary, a short-chain aliphatic carboxylic acid hydrazide and/or an aromatic carboxylic acid hydrazide as a heat stabilizer (as other component(s), a polyacetal resin, other additive(s), or others) through a side feed port, kneading and extruding the fed components by using an extruder to prepare pellets, and molding a shaped article from the pellets; (4) once making pellets (master batch) different in formulation, mixing (diluting) the pellets in a certain ratio, and molding a shaped article having a certain formulation from the resulting pellets, or (5) a process comprising allowing the specific carboxylic acid hydrazide to coexist with or adhere to a pelletized polyacetal resin by for example spraying or coating (e.g., surface-coating), and molding a shaped article having a certain formulation from the resulting pellets is utilized.

Among these processes, the processes (1), (2) and (3) are preferred. In particular, it is preferred to melt-knead components by a uniaxial or biaxial extruder having exhaust (or degas) vent port(s) of not less than 1. Moreover, the carboxylic acid hydrazide may be side-fed through either of a feed port of the upstream or downstream of an exhaust vent port. In particular, it is preferred to feed the carboxylic acid hydrazide from the downstream of the exhaust vent port. Further, in the extruding and preparing step, the amount of formaldehyde emitted from the obtained shaped (or molded) article can be further reduced by a preparation method comprising preblending a processing auxiliary such as water and/or an alcohol (e.g. , methanol, ethanol, isopropyl alcohol, and n-propyl alcohol) or infusing the processing auxiliary through a feed port of the upstream of an exhaust vent port, and exhausting and removing volatile component (s) containing water and/or the alcohol from the exhaust vent port. The amount of water and/or the alcohol to be added as such a processing auxiliary is not particularly limited to a specific one. The amount of water and/or the alcohol may be usually selected from the range of about 0 to 20 parts by weight relative to 100 parts by weight of the polyacetal resin, and may be preferably about 0.01 to 10 parts by weight and more preferably 0.1 to 5 parts by weight relative to 100 parts by weight of the polyacetal resin.

Incidentally, in the preparation of a composition for use in a shaped article, mixing of a powdered (particulate) polyacetal resin as a substrate (e.g., a powder (particulate) obtained by grinding a part or all of the polyacetal resin) with other components (e.g., the specific carboxylic acid hydrazide, other additive(s) (e.g., a stabilizer, an impact resistance improver, a slip-improving agent, a coloring agent and/or a filler) followed with melt-kneading improves the degree of dispersion of the additives and therefore is advantageous.

The polyacetal resin composition of the present invention realizes that the emission of formaldehyde due to oxidation or thermal decomposition or the like of the polyacetal resin is remarkably restrained or inhibited and that the working environment is improved or ameliorated particularly in the molding and processing (particularly, a melt-molding and processing) step. Moreover, deposition of decomposition products or additives on the mold (mold deposit), blooming or bleeding of such products or additives from a shaped article can be remarkably restricted or inhibited, and various problems on the molding and processing step can be overcome.

### (Shaped article)

The present invention also includes a shaped article formed from the resin composition. The shaped article contains the polyacetal resin and the specific carboxylic acid hydrazide in combination, and has excellent stability in an extrusion and/or molding process with having extremely small amount of emission (or generation) of formaldehyde. In other words, shaped articles molded from the conventional polyacetal resins containing antioxidants and other stabilizers liberate relatively large amounts of formaldehyde, cause corrosion and discoloration, as well as pollute the living and working environment. For example, the formaldehyde emission from commercial ordinary polyacetal resin articles is about 2 to 5 µg per one cm² of surface area under dry conditions (in a constant-temperature dry atmosphere) and/or about 3 to 6 µg per one cm² of surface area under humid conditions (in a constant-temperature moisture-laden atmosphere).

On the other hand, in the polyacetal resin shaped article of the present invention, the amount of formaldehyde emission from the shaped article can be effectively reduced by a smaller amount of the specific carboxylic acid hydrazide. Further, in the case of using the specific carboxylic acid hydrazide and the heat stabilizer (formaldehyde inhibitor) in combination, the amount of formaldehyde emission can be also inhibited to a large extent. Concretely, the amount of the formaldehyde emission is not more than 1.5 µg per one cm² of surface area of the shaped article under dry conditions, preferably about 0 to 1.0 µg, more preferably about 0 to 0.6 µg, and usually about 0.001 to 1.0 µg, and further, about 0 to 0.1 µg is also achievable. Moreover, in humid conditions, the formaldehyde emission is not more than 2.5 µg (e.g., about 0 to 2 µg) per one cm² of surface area of the shaped article, preferably about 0 to 1.2 µg, more preferably about 0 to 0.4 µg, and further, about 0 to 0.2 µg is also achievable. The amount in humid conditions may be usually about 0.001 to 1.2 µg.

The shaped article of the present invention may show the above-mentioned formaldehyde emission under either dry conditions or humid conditions. In particular, the shaped article shows the above formaldehyde emission level under both dry and humid conditions in many cases. Therefore, the shaped article of the present invention can be used as a material which can be adapted to more severe environment.

The formaldehyde emission under dry conditions can be determined as follows.

After the shaped article of polyacetal resin is cut if necessary and its surface area is measured, a suitable portion of the article (e.g., the amount equivalent to a surface area of about 10 to 50 cm²) is placed in a vessel (20 mL capacity) to seal and stand (or maintained) at a temperature of 80°C for 24 hours. Then, this sealed vessel is charged with 5 mL of water and the formaldehyde in the aqueous solution is assayed in accordance with JIS (Japanese Industrial Standards) K0102, 29 (under the heading of Formaldehyde) to calculate the formaldehyde emission per unit surface area of the shaped article (µg/cm²).

The formaldehyde emission under humid conditions can be determined as follows.

After the shaped article of a polyacetal resin is cut if necessary and its surface area is measured, a suitable portion of the shaped article (e.g. , the amount equivalent to a surface area of about 10 to 100 cm²) is suspended from the lid of a sealable vessel (1 L capacity) containing 50 mL of distilled water. After seal of the vessel, the vessel is allowed to stand (or maintained) in a constant temperature oven at 60°C for 3 hours. Thereafter, the vessel is allowed to stand at a room temperature for 1 hour and the formaldehyde in the aqueous solution in the vessel is assayed in accordance with JIS K0102, 29 (under the heading of Formaldehyde) to calculate the formaldehyde emission per unit surface area of the article (µg/cm²).

The above quantitative definition on formaldehyde emission in the present invention is adaptable as far as the polyacetal resin and the specific carboxylic acid hydrazide, that is, the definition is adaptable not only for shaped articles molded from polyacetal resin compositions comprising the conventional additive (s) (e.g., a conventional stabilizer, and a mold-release agent), but also for shaped articles molded from comparable resin compositions containing an inorganic filler and/or other polymers, even if only a major part of the surface of the article (for example, 50 to 100% of the total surface area) is constituted by the polyacetal resin (for example, a multi-colored article or a coated article).

### INDUSTRIAL APPLICABILITY

The resin composition of the present invention is useful for molding various shaped articles by a conventional molding (or shaping) method (for example, injection molding, extrusion molding, compression molding, blow molding, vacuum molding, foam molding, rotation molding, and gas injection molding).

Moreover, the shaped article (or molded article) of the present invention finds application in any field of use where formaldehyde is objectionable (e.g., knob and lever as bicycle parts) and can also be used advantageously as parts and members in a variety of fields inclusive of automotive parts, electrical and electronic component (driving component and driven component) parts, architectural members and pipeline installation parts, household (for daily use) and cosmetic product parts, and medical device (for diagnostic or therapeutic use) parts.

More specifically, the automotive parts may include car interior parts such as inner handle, fuel trunk opener, seat belt buckle, assist lap, various switches, knob, lever, and clip; electrical system parts such as meters and connectors; in-vehicle electrical and electronic parts or mountings related to audio equipment and car navigation equipment, parts in contact with metals, typically the window regulator carrier plate, mechanical parts such as door lock actuator parts, mirror parts, wiper motor system parts, and fuel system parts.

The electrical or electronic component parts (the mechanical parts) may include, for example, parts or members constituted with shaped articles of polyacetal resin and fitted with a number of metal contacts [e. g. audio equipment such as cassette tape recorder, video equipment such as video tape recorder (VTR), 8 mm or other video camera, etc. , office automation (OA) equipment such as copying machines, facsimile, word processor, computer, toys actuated by the driving force of an electric motor or a spring, a telephone, a keyboard as an accessory to a computer or the like]. To be specific, there can be mentioned chassis (base), gear, lever, cam, pulley, and bearing. Furthermore, the electrical or electronic component parts are applicable to optical and magnetic recording medium parts at least partly made of molded polyacetal resin (e.g. metal thin-film magnetic tape cassette, magnetic disk cartridge, opticomagnetic disc cartridge,etc.)and more particularly, the metal tape cassette for music, digital audio tape cassette, 8 mm video tape cassette, floppy (registered trademark) disk cartridge, minidisk cartridge, etc. As specific optical and magnetic medium parts, there can be mentioned tape cassette parts (tape cassette body, reel, hub, guide, roller, stopper, lid, etc.) and disk cartridge parts (disk cartridge body (case), shutter, cramping plate, etc.).

In addition, the shaped article of a polyacetal resin according to the present invention can be used with advantage in architectural members and pipeline parts such as lighting equipment parts, interior architectural members (such as fittings, fixtures, furnishings), piping, cock, faucet, rest room (lavatory)-related parts, etc., a broad range of products related to daily living, cosmetic products, and medical devices, for example fastener (such as slide fastener, snap fastener, hoop-and-loop fastener, rail fastener), stationery, chapstick or lipstick cases, cleansing device, water cleaner, spray nozzle, spray device or container, aerosol container, general vessels, and syringe holder.

### EXAMPLES

The following examples are intended to describe this invention in further detail and should by no means be interpreted as defining the scope of the invention.

Incidentally, referring to the examples and comparative examples, the moldability (the amount of the deposit on the mold), the amount of formaldehyde emission from the molded (or shaped) articles under dry and humid conditions, and the bleeding property were evaluated based on the following methods.

### [Moldability (the amount of the deposit on the mold)]

A pellet formed with a polyacetal resin composition was continuously or successively shaped or molded by using a 30 t injection molding machine (100 shots) to obtain a certain-shaped article (20 mm in diameter and 1 mm in thickness), and the degree of the deposition on the mold was evaluated and classified into five grades. Incidentally, the larger the number of the levels is, the lower or smaller the amount of the deposit (i.e., mold deposit) is.

### [Amount of formaldehyde emission from shaped article in dry conditions]

Each resin sample consisting of 10 test pieces (one test piece: 2 mm x 2 mm x 50 mm; total surface area: about 40 cm²) was placed in a vessel (capacity 20 mL) to seal and heated in a constant temperature oven at 80°C for 24 hours. After air-cooling to a room temperature, 5 mL of distilled water was injected into the vessel using a syringe. The formaldehyde content of this aqueous solution was determined in accordance with JIS K0102, 29 (under the heading of Formaldehyde) and the formaldehyde gas emission per surface area (µg/cm²) was calculated.

### [Amount of formaldehyde emission from shaped article in humid conditions, and the bleeding property]

Two plate test pieces (one piece: 100 mm x 40 mm x 2 mm; total surface area of 85.6 cm²) were suspended from a lid of a polyethylene bottle (capacity 1 L) containing 50 mL of distilled water. The bottle was sealed to stand in a constant temperature oven at 60°C for 3 hours, followed by standing for 1 hour at room temperature. The formaldehyde content of the aqueous solution in the bottle was determined in accordance with JIS K0102, 29 (under the heading of Formaldehyde) and the formaldehyde gas emission per surface area of the article (µg/cm²) was calculated.

Further, the surface of the plate test piece (shaped article) after the test was visually observed, and the degree of the bleeding was evaluated based on the following criteria.
"A": No bleeding was observed.
"B": Slight bleeding was observed.
"C": Extremely heavy bleeding was observed.

### Examples 1 to 14 and 16 to 19

100 parts by weight of a polyacetal resin copolymer, a carboxylic acid hydrazide, an antioxidant, a processing stabilizer, a heat stabilizer, a coloring agent, and a weather (light)-resistant stabilizer in the proportions indicated in Tables 1 and 2 were preblended (or premixed). Concerning each of thus obtained mixtures, the mixture was supplied through a main feed port of a biaxial extruder (30 mm diameter) having one vent port, and melt-mixed to prepare a pelletized composition. From thus obtained pellets, prescribed test pieces were fabricated with an injection molding machine, and concerning each test piece, the amount of formaldehyde emission from the test piece, and the bleeding property were measured. The results are shown in Tables 1 and 2.

### Example 15

95 parts by weight of a polyacetal resin copolymer, an antioxidant, a processing stabilizer, and a heat stabilizer in the proportions indicated in Table 2 were preblended (or premixed). The obtained mixture was supplied through a main feed port of a biaxial extruder (30 mm diameter) having one vent port, and another mixture containing 5 parts by weight of a polyacetal resin copolymer particulate and 0.1 part by weight of a carboxylic acid hydrazide was fed through a side feed port of the downstream of the bent port, and these mixtures were melt-kneaded to prepare a palletized composition. From thus obtained pellets, prescribed test pieces were fabricated with an injection molding machine, and concerning each test piece, the amount of formaldehyde emission from the test piece, and the bleeding property were measured. The results are shown in Table 2.

### Comparative Examples 1 to 5

For comparison, a sample prepared without addition of the carboxylic acid hydrazide compound, and samples with addition of either adipic acid dihydrazide or lauric acid hydrazide as a short-chain fatty acid hydrazide were evaluated in the same manner described above. The results are shown in Table 3.

The polyacetal resin copolymers, the carboxylic acid hydrazide compounds, the antioxidants, the processing stabilizers, the heat stabilizers, the coloring agents, and the weather (light)-resistant stabilizers used in the Examples and Comparative Examples are as follows.

### 1. Polyacetal copolymer "a"

(a-1): Polyacetal resin copolymer (melt index = 9 g/10 min.)
(a-2): Polyacetal resin copolymer (melt index = 27 g/10 min.)
Incidentally, the melt index was a value (g/10 min.) determined under conditions of 190°C and 2169 g, based on ASTM-D1238.

### 2. Carboxylic acid hydrazide "b"

(b-1): 8,12-Eicosadienedioic acid dihydrazide
(b-2): Eicosanedioic acid dihydrazide
(b-3): 12-Hydroxystearic acid hydrazide
(b-4): Montanic acid hydrazide
(b-5): 1,4-Cyclohexanedicarboxylic acid dihydrazide
(b-6): Linoleic dimer acid dihydrazide
(b-7): Adipic acid dihydrazide
(b-8): Lauric acid hydrazide

### 3. Antioxidant "c"

(c-1): Triethylene glycol bis[3-(3-t-butyl-5-methyl-4-hydroxyphenyl)propionate]
(c-2): Pentaerythritol tetrakis[3-(3,5-di-t-butyl-4-hydroxyphenyl)propionate]
(c-3): 2,2'-methylenebis(4-methyl-6-t-butylphenol)

### 4. Processing stabilizer "d"

(d-1): Ethylenebisstearylamide
(d-2) : Montanate [manufactured by Toyo-Petrolite Co., Ltd., "LUZA WAX-EP"]
(d-3): Polyethylene glycol [molecular weight: 35000]

### 5. Heat stabilizer (metal salt of an organic carboxylic acid, alkaline earth metal salt, basic nitrogen-containing compound) "e"

(e-1): Calcium 12-hydroxysrearate
(e-2): Magnesium stearate
(e-3): Calcium citrate
(e-4): Magnesium oxide
(e-5): Allantoin
(e-6): Biurea
(e-7): Nylon 6-66-610

### 6. Coloring agent "f"

(f-1): Carbon black (acetylene black)

### 7. Weather (light)-resistant stabilizer "g"

(g-1): 2-[2'-Hydroxy-3',5'-bis(α,α-dimethylbenzyl) phenyl]benzotriazole
(g-2): Bis(2,2,6,6-tetramethyl-4-piperidyl)sebacate

[Table 1]

**Table 1**

| | Examples | | | | | | | | | | | | |
|---|---|---|---|---|---|---|---|---|---|---|---|---|---|
| | 1 * | 2 | 3 | 4 | 5 | 6 | 7 | 8 | 9 | 10 | 11 | 12 * | 13 |
| Polyacetal resin copolymer "a" (parts by weight) | a-1 | a-1 | a-2 | a-1 | a-1 | a-1 | a-1 | a-1 | a-1 | a-1 | a-1 | a-1 | a-1 |
| | 100 | 100 | 100 | 100 | 100 | 100 | 100 | 100 | 100 | 100 | 100 | 100 | 100 |
| Carboxylic acid hydrazide "b" (parts by weight) | b-1 | b-1 | b-1 | b-1 | b-1 | b-1 | b-1 | b-2 | b-3 | b-3 | b-4 | b-5 | b-6 |
| | 0.5 | 0.3 | 0.3 | 0.2 | 0.2 | 0.2 | 0.2 | 0.2 | 0.2 | 0.2 | 0.2 | 0.2 | 0.2 |
| Antioxidant "c" (parts by weight) | - | c-1 | c-1 | c-1 | c-2 | c-3 | c-3 | c-1 | c-3 | c-3 | c-1 | c-3 | c-1 |
| | | 0.3 | 0.3 | 0.3 | 0.3 | 0.3 | 0.3 | 0.3 | 0.3 | 0.3 | 0.3 | 0.3 | 0.3 |
| Processing stabilizer "d" (parts by weight) | - | d-1 | d-1 | d-2 | d-1 | d-1 | d-3 | d-1 | d-2 | d-2 | d-1 | d-1 | d-1 |
| | | 0.2 | 0.2 | 0.2 | 0.2 | 0.2 | 0.2 | 0.2 | 0.2 | 0.2 | 0.2 | 0.2 | 0.2 |
| Heat stabilizer "e" (parts by weight) | - | e-1 | e-1 | e-1 | e-2 | e-3 | e-4 | e-3 | e-1 | e-3 | e-1 | e-3 | e-1 |
| | | 0.03 | 0.03 | 0.03 | 0.03 | 0.03 | 0.03 | 0.03 | 0.03 | 0.03 | 0.03 | 0.03 | 0.03 |
| Coloring agent "f" (parts by weight) | - | - | - | - | - | - | - | - | - | - | - | - | - |
| Weather (light)-resistant stabilizer "g" (parts by weight) | - | - | - | - | - | - | - | - | - | - | - | - | - |
| Moldability (Mold deposit) | 3 | 4 | 4 | 5 | 5 | 5 | 5 | 5 | 5 | 5 | 5 | 4 | 5 |
| Amount of formaldehyde emission, Dry (µg/cm²) | 0.04 | 0.03 | 0.03 | 0.05 | 0.05 | 0.03 | 0.04 | 0.06 | 0.04 | 0.04 | 0.05 | 0.04 | 0.05 |
| Amount of formaldehyde emission, Humid (µg/cm²) | 0.06 | 0.08 | 0.06 | 0.07 | 0.08 | 0.05 | 0.07 | 0.08 | 0.06 | 0.06 | 0.08 | 0.07 | 0.08 |
| Bleeding property | B | A | A | A | A | A | A | A | A | A | A | A | A |

| | | | | | | | | | | | | | |
|---|---|---|---|---|---|---|---|---|---|---|---|---|---|
| * Comparative | | | | | | | | | | | | | |

[Table 2]

**Table 2**

| | Examples | | | | | |
|---|---|---|---|---|---|---|
| | 14 | 15 | 16 | 17 | 18 | 19 |
| Polyacetal resin copolymer "a" (parts by weight) | a-1 | a-1 | a-1 | a-1 | a-1 | a-1 |
| | 100 | 100 | 100 | 100 | 100 | 100 |
| Carboxylic acid hydrazide "b" (parts by weight) | b-1 | b-1 | b-1 | b-1 | b-1 | b-3 |
| | 0.1 | 0.1 | 0.1 | 0.3 | 0.3 | 0.3 |
| Antioxidant "c" (parts by weight) | c-1 | c-1 | c-1 | c-1 | c-1 | c-1 |
| | 0.3 | 0.3 | 0.3 | 0.3 | 0.03 | 0.3 |
| Processing stabilizer "d" (parts by weight) | d-1 | d-1 | d-2 | d-1 | d-1 | d-1 |
| | 0.2 | 0.2 | 0.2 | 0.2 | 0.2 | 0.2 |
| Heat stabilizer "e" (parts by weight) | e-4 e-5 | e-4 e-6 | e-3 e-7 | e-1 | e-1 | e-1 |
| | 0.03 0.05 | 0.03 0.05 | 0.03 0.05 | 0.1 | 0.1 | 0.1 |
| Coloring agent "f" (parts by weight) | - | - | - | f-1 | - | f-1 |
| | | | | 0.5 | | 0.5 |
| Weather (light)-resistant stabilizer "g" (parts by weight) | - | - | - | - | g-1 g-2 | - |
| | | | | | 0.4 0.2 | |
| Moldability (Mold deposit) | 4 | 4 | 4 | 4 | 4 | 4 |
| Amount of formaldehyde emission, Dry (µg/cm²) | 0.03 | 0.03 | 0.04 | 0.13 | 0.22 | 0.11 |
| Amount of formaldehyde emission, Humid (µg/cm²) | 0.05 | 0.04 | 0.06 | 0.15 | 0.23 | 0.13 |
| Bleeding property | A | A | A | B | B | B |

[Table 3]

**Table 3**

| | Comparative Examples | | | | |
|---|---|---|---|---|---|
| | 1 | 2 | 3 | 4 | 5 |
| Polyacetal resin copolymer "a" | a-1 | a-1 | a-1 | a-1 | a-1 |
| (parts by weight) | 100 | 100 | 100 | 100 | 100 |
| Carboxylic acid hydrazide "b" | - | b-7 | b-8 | b-7 | b-8 |
| (parts by weight) | | 0.5 | 0.5 | 0.3 | 0.3 |
| Antioxidant "c" | c-1 | - | - | c-1 | c-1 |
| (parts by weight) | 0.3 | | | 0.3 | 0.3 |
| Processing stabilizer "d" | d-1 | - | - | d-1 | d-1 |
| (parts by weight) | 0.2 | | | 0.2 | 0.2 |
| Heat stabilizer "e" | e-1 | - | - | e-1 | e-1 |
| (parts by weight) | 0.1 | | | 0.03 | 0.03 |
| Coloring agent "f" (parts by weight) | - | - | - | - | - |
| Weather (light)-resistant stabilizer "g" (parts by weight) | - | - | - | - | - |
| Moldability (Mold deposit) | 5 | 1 | 1 | 1 | 1 |
| Amount of formaldehyde emission, Dry (µg/cm²) | 4.00 | 0.04 | 0.03 | 0.05 | 0.04 |
| Amount of formaldehyde emission, Humid (µg/cm²) | 1.58 | 0.07 | 0.06 | 0.10 | 0.9 |
| Bleeding property | A | C | C | C | C |

It is apparent from the Tables that as compared with the amount of formaldehyde emission from the resin compositions of Comparative Examples, that from the resin compositions according to Examples is considerably decreased or reduced, and the working and using environment can be drastically improved. Further, in Examples, moldability (mold deposit) is improved, and bleeding out is inhibited, thereby the quality of the shaped article is improved.

## Claims

1. A polyacetal resin composition comprising(A) a polyacetal resin, (B) a carboxylic acid hydrazide, (C) an antioxidant, (D) a heat stabilizer and (E) a processing stabilizer, wherein the carboxylic acid hydrazide (B) comprises at least one member selected from the group consisting of a saturated or unsaturated aliphatic C₁₆₋₁₀carboxylic acid hydrazide, a saturated or unsaturated linear C₂₀₋₆₀dimer acid hydrazide and a saturated or unsaturated aliphatic oxyC₁₆₋₁₀carboxylic acid hydrazide having at least one hydroxyl group per one molecule,
the antioxidant (C) comprises at least one member selected from the group consisting of a hindered phenol-series compound and a hindered amine-series compound,
the heat stabilizer (D) comprises at least one member selected from the group consisting of a basic nitrogen-containing compound, a phosphine-series compound, a metal salt of an organic carboxylic acid, an alkali or alkaline earth metal inorganic compound, a hydrotalcite, and a zeolite,
wherein the basic nitrogen-containing compound is at least one member selected from the group consisting of an aminotriazine compound, a guanidine compound, a urea compound, an amino acid compound, an amino alcohol compound, an imide compound, and an amide compound.
the processing stabilize (E) comprises at least one member selected from the group consistingof a saturated or unsaturated C₁₀₋₁₁fatty acid, a saturated or unsaturated C₁₀₋₃₄fatty acid ester or a saturated or unsaturated C₁₀₋₃₄fatty acid amide, a polyoxyalkylene glycol, and a silicone-series compound: and
the proportion of the carboxylic acid hydrazide (B) is 0.005 to 2 parts by weight, the proportion of the antioxidant (C) is 0.01 to 2 parts by weight, the proportion of the heat stabilizer (D) is 0.01 to 2 parts by weight and the proportion of the processing stabilizer (E) is 0.03 to 3 parts by weight relative to 100 parts by weight of the polyacetal resin (A).

2. A resin composition according to claim 1,wherein the carboxylic acid hydrazide comprises at least one member selected from the group consisting of a saturated or unsaturated aliphatic C₁₆₋₁₀monocarboxylic acid monohydrazide, a saturated or unsaturated aliphatic C₁₆₋₁₀dicarboxylic acid mono- or dihydrazide, a saturated or unsaturated aliphatic oxy-C₁₆₋₁₀monocarboxylic acid monohydrazide, a saturated or unsaturated aliphatic oxy-C₁₆₋₁₀dicarboxylic acid mono- or dihydrazide, and a saturated or unsaturated linear C₂₀₋₄₀dimer acid mono- or dihydrazide.

3. A resin composition according to claim 1, wherein the carboxylic acid hydrazide comprises at least one member selected from the group consisting of montanic acid hydrazide, eicosanedioic acid dihydrazide, 8,12-eicosadienedioic acid dihydrazide, 12-hydroxystearic acid hydrazide, and linoleic dimer acid dihydrazide.

4. A resin composition according to claim 1, wherein the heat stabilizer comprises at least one member selected from the group consisting of an alkaline earth metal salt of an organic carboxylic acid, and an alkaline earth metal oxide.

5. A resin composition according to claim 1, wherein the heat stabilizer comprises an alkaline earth metal salt of an oxy-acid.

6. A resin composition according to claim 1, which further comprises at least one member selected from the group consisting of a weather (light)-resistant stabilizer, an impact resistance improver, a slip-improving agent, a coloring agent, and a filler.

7. A resin composition according to claim 6, wherein the antioxidant, the processing stabilizer, the heat stabilizer, and the weather (light)-resistant stabilizer are substantially free from an intramolecular ester bond.

8. A resin composition according to claim 6, wherein the weather (light)-resistant stabilizer comprises at least one member selected from the group consisting of a benzotriazole-series compound, a benzophenone-series compound, an aromatic benzoate-series compound, a cyanoacrylate-series compound, a oxalic anilide-series compound, and a hydroxyaryl-1,3,5-triazine-series compound.

9. A resin composition according to claim 6, wherein the impact resistance improver comprises at least one member selected from the group consisting of a thermoplastic polyurethane and an acrylic core-shell polymer.

10. A resin composition according to claim 6, wherein the slip-improving agent comprises at least one member selected from the group consisting of an olefinic polymer,a silicone-series resin,and a fluorine-containing resin.

11. A process for producing a polyacetal resin composition, which comprises mixing (A) a polyacetal resin. (B) a carboxylic acid hydrazide, (C) an antioxidant, (D) a heat stabilizer and (E) a processing stabilizer. wherein the resin composition is prepared by using an extruder, and feeding at least said carboxylic acid hydrazide through a side feed port of the extruder,
the carboxylic acid hydrazide (B) comprises at least one member selected from the group consisting of a saturated or unsaturated aliphatic C₁₆₋₁₀carboxylic acid hydrazide, a saturated or unsaturated linear C₂₀₋₆₀dimer acid hydrazide, and a saturated or unsaturated aliphatic oxyC₁₆₋₄₀carboxylic acid hydrazide having at least one hydroxyl group per one molecule,
the antioxidant (C) comprises at least one member selected from the group consisting of a hindered phenol-series compound and a hindered amine-series compound,
the heat stabilizer (D) comprises at least one member selected from the group consisting of a basic nitrogen-containing compound, a phosphine-series compound, a metal salt of an organic carboxylic acid, an alkali or alkaline earth metal inorganic compound, a hydrotalcite, and a zeolite,
wherein the basic nitrogen-containing compound is at least one member selected from the group consisting of an aminotriazine compound, a guanidine compound, a urea compound, an aminoacid compound, an amino alcohol compound, an imide compound, and an amide compound.
the processing stabilizer (E) comprises at least one member selected from the group consisting of a saturated or unsaturated C₁₀₋₃₄fatty acid, a saturated or unsaturated C₁₀₋₃₄fatty acid ester or a saturated or unsaturated C₁₀₋₃₄fatty acid amide, a polyoxyalkylene glycol, and a silicone-series compound; and
the proportion of the carboxylic acid hydrazide (B) is 0.005 to 2 parts by weight, the proportion of the antioxidant (C) is 0.01 to 2 parts by weight, the proportion of the heat stabilizer (D) is 0.01 to 2 parts by weight and the proportion of the processing stabilizer (E) is 0.03 to 3 parts by weight, relative to 100 parts by weight of the polyacetal resin (A).

12. A shaped article formed from a polyacetal resin composition recited in claim 1.

13. A shaped article according to claim 12, wherein (1) the emission of formaldehyde from the shaped article which is maintained in a closed space for 24 hours at a temperature of 80°C is not more than 1.0 µg per one cm² of the surface area of the article, and/or (2) the emission of formaldehyde from the shaped article which is maintained in a closed space for 3 hours at a temperature of 60°C under saturated humidity is not more than 2 µg per one cm² of the surface area of the article.

14. A shaped article according to claim 12, which is an automotive part, an electric or electronic device part, an architectural or pipeline part, a household utensil or cosmetic article part, or a medical device part.

## Patentansprüche

1. Eine Polyacetalharzzusammensetzung, die (A) ein Polyacetalharz, (B) ein Carboxylsäure-Hydrazid, (C) ein Antioxidans, (D) einen Wärmestabilisator und (E) einen Verarbeitungsstabilisator umfasst, worin das Carboxylsäure-Hydrazid (B) mindestens eines aus der Gruppe, bestehend aus einem gesättigten oder ungesättigten aliphatischen C₁₆₋₄₀-Carboxylsäure-Hydrazid, einem gesättigten oder ungesättigten linearen C₂₀₋₆₀-Dimersäurehydrazid und einem gesättigten oder ungesättigten aliphatischen Oxy-C₁₆₋₄₀-Carboxylsäure-Hydrazid mit mindestens einer Hydroxylgruppe pro Molekül, enthält,
wobei das Antioxidans (C) mindestens eines aus der Gruppe, bestehend aus einer gehinderten Phenolreihen-Verbindung und einer gehinderten Aminreihen-Verbindung, enthält;
der Wärmestabilisator (D) mindestens eines aus der Gruppe, bestehend aus einer grundlegenden stickstoffhaltigen Verbindung, einer Phosphinreihen-Verbindung, einem Metallsalz einer organischen Carboxylsäure, einer alkalischen oder basischen anorganischen Erdmetallverbindung, einem Hydrotalcit und einem Zeolith, enthält;
worin die grundlegende stickstoffhaltige Verbindung mindestens eines aus der Gruppe, bestehend aus einer Aminotriazinverbindung, einer Guanidinverbindung, einer Ureaverbindung, einer Aminosäureverbindung, einer Aminoalkoholverbindung, einer Imidverbindung und einer Amidverbindung, ist;
der Verarbeitungsstabilisator (E) mindestens eines aus der Gruppe, bestehend aus einer gesättigten oder ungesättigten C₁₀₋₃₄-Fettsäure, einem gesättigten oder ungesättigten C₁₀₋₃₄-Fettsäureester oder einem gesättigten oder ungesättigten C₁₀₋₃₄-Fettsäureamid, einem Polyoxyalkylenglykol und einer Silikonreihen-Verbindung, enthält; und
der Anteil des Carboxylsäure-Hydrazids (B) 0,005 bis 2 Gewichtsteile, der Anteil des Antioxidans (C) 0,01 bis 2 Gewichtsteile, der Anteil des Wärmestabilisators (D) 0,01 bis 2 Gewichtsteile und der Anteil des Verarbeitungsstabilisators (E) 0,03 bis 3 Gewichtsteile relativ zu 100 Gewichtsteilen des Polyacetalharzes (A) beträgt.

2. Eine Harzzusammensetzung gemäß Anspruch 1, worin das Carboxylsäure-Hydrazid mindestens eines aus der Gruppe, bestehend aus einem gesättigten oder ungesättigten aliphatischen C₁₆₋₄₀-Monocarboxylsäure-Monohydrazid, einem gesättigten oder ungesättigten aliphatischen C₁₆₋₄₀-Dicarboxylsäure-Mono- oder Dihydrazid, einem gesättigten oder ungesättigten aliphatischen Oxy-C₁₆₋₄₀-Monocarboxylsäure-Monohydrazid, einem gesättigten oder ungesättigten aliphatischen Oxy-C₁₆₋₄₀-Dicarboxylsäure-Mono- oder Dihydrazid oder einem gesättigten oder ungesättigten linearen C₂₀₋₄₀-Dimersäure-Mono-oder Dihydrazid, enthält.

3. Eine Harzzusammensetzung gemäß Anspruch 1, worin das Carboxylsäure-Hydrazid mindestens eines aus der Gruppe, bestehend aus Montansäure-Hydrazid, Eicosansäure-Dihydrazid, 8,12-Eicosadiensäure-Dihydrazid, 12-Hydroxystearinsäure-Hydrazid und Linolsäuredimer-Dihydrazid, enthält.

4. Eine Harzzusammensetzung gemäß Anspruch 1, worin der Wärmestabilisator mindestens eines aus der Gruppe, bestehend aus einem basischen Erdmetallsalz einer organischen Carboxylsäure sowie einem basischen Erdmetalloxid, enthält.

5. Eine Harzzusammensetzung gemäß Anspruch 1, worin der Wärmestabilisator ein basisches Erdmetallsalz einer Oxysäure enthält.

6. Eine Harzzusammensetzung gemäß Anspruch 1, die überdies mindestens eines aus der Gruppe, bestehend aus einem Wetter (Licht)-beständigen Stabilisator, einem Stoßfestigkeitsverbesserer, einem Wirkstoff zur Verbesserung der Gleiteigenschaften, einem Farbstoff und einem Füllstoff, enthält.

7. Eine Harzzusammensetzung gemäß Anspruch 6, worin das Antioxidans, der Verarbeitungsstabilisator, der Wärmestabilisator und der Wetter (Licht)-beständige Stabilisator im Wesentlichen frei von einer intramolekularen Esterbindung sind.

8. Eine Harzzusammensetzung gemäß Anspruch 6, worin der Wetter (Licht)-beständige Stabilisator mindestens eines aus der Gruppe, bestehend aus einer Benzotriazolreihen-Verbindung, einer Benzophenonreihen-Verbindung, einer aromatischen Benzoatreihen-Verbindung, einer Cyanoacrylatreihen-Verbindung, einer Oxalanilidreihen-Verbindung und einer Hydroxyaryl-1,3,5-triazinreihen-Verbindung, enthält.

9. Eine Harzzusammensetzung gemäß Anspruch 6, worin der Stoßfestigkeitsverbesserer mindestens eines aus der Gruppe, bestehend aus einem thermoplastischen Polyurethan und einem Acryl-Kern-Schale-Polymer, enthält

10. Eine Harzzusammensetzung gemäß Anspruch 6, worin der Wirkstoff zur Verbesserung der Gleiteigenschaften mindestens eines aus der Gruppe, bestehend aus einem Olefinpolymer, einem Silikonreihen-Harz und einem fluorhaltigen Harz, enthält.

11. Ein Verfahren zur Herstellung einer Polyacetalharzzusammensetzung, bestehend aus dem Vermischen (A) eines Polyacetalharzes, (B) eines Carboxylsäure-Hydrazids, (C) eines Antioxidans, (D) eines Wärmestabilisators und (E) eines Verarbeitungsstabilisators, worin die Harzzusammensetzung mit Hilfe eines Extruders hergestellt wird und zumindest das genannte Carboxylsäure-Hydrazid durch eine seitliche Füllöffnung des Extruders eingespeist wird,
wobei das Carboxylsäure-Hydrazid (B) mindestens eines aus der Gruppe, bestehend aus einem gesättigten oder ungesättigten aliphatischen C₁₆₋₄₀-Carboxylsäure-Hydrazid, einem gesättigten oder ungesättigten linearen C₂₀₋₆₀-Dimersäure-Hydrazid und einem gesättigten oder ungesättigten aliphatischen Oxy-C₁₆₋₄₀-Carboxylsäure-Hydrazid mit mindestens einer Hydroxylgruppe pro Molekül, enthält,
das Antioxidans (C) mindestens eines aus der Gruppe, bestehend aus einer verhinderten Phenolreihen-Verbindung und einer verhinderten Aminreihen-Verbindung, beinhaltet,
der Wärmestabilisator (D) mindestens eines aus der Gruppe, bestehend aus einer grundlegenden stickstoffhaltigen Verbindung, einer Phosphinreihen-Verbindung, einem Metallsalz einer organischen Carboxylsäure, einer alkalischen oder basischen anorganischen Erdmetallverbindung, einem Hydrotalcit und einem Zeolith, enthält;
worin die grundlegende stickstoffhaltige Verbindung mindestens eines aus der Gruppe, bestehend aus einer Aminotriazinverbindung, einer Guanidinverbindung, einer Ureaverbindung, einer Aminosäureverbindung, einer einer Aminoalkoholverbindung, einer Imidverbindung und einer Amidverbindung, enthält;
der Verarbeitungsstabilisator (E) mindestens eines aus der Gruppe, bestehend aus einer gesättigten oder ungesättigten C₁₀₋₃₄-Fettsäure, einem gesättigten oder ungesättigten C₁₀₋₃₄-Fettsäureester oder einem gesättigten oder ungesättigten C₁₀₋₃₄-Fettsäureamid, einem Polyoxyalkylenglykol und einer Silikonreihen-Verbindung, enthält; und
der Anteil des Carboxylsäure-Hydrazids (B) 0,005 bis 2 Gewichtsteile, der Anteil des Antioxidans (C) 0,01 bis 2 Gewichtsteile, der Anteil des Wärmestabilisators (D) 0,01 bis 2 Gewichtsteile und der Anteil des Verarbeitungsstabilisators (E) 0,03 bis 3 Gewichtsteile relativ zu 100 Gewichtsteilen des Polyacetalharzes (A) beträgt.

12. Ein geformter Artikel, der aus einer Polyacetalharzzusammensetzung, die in Anspruch 1 erwähnt wird, geformt wird.

13. Ein geformter Artikel gemäß Anspruch 12, worin (1) die Formaldehydemission, die vom geformten Artikel ausgeht, welcher 24 Stunden lang bei einer Temperatur von 80°C in einem geschlossenen Bereich gehalten wird, nicht mehr als 1,0 µg pro cm² der Oberfläche des Artikels beträgt, und/oder (2) die Formaldehydemission, die vom geformten Artikel ausgeht, der 3 Stunden lang bei einer Temperatur von 60°C in einem geschlossenen Bereich bei gesättigter Feuchtigkeit gehalten wird, nicht mehr als 2 µg pro cm² der Oberfläche des Artikels beträgt.

14. Ein geformter Artikel gemäß Anspruch 12, bei dem es sich um ein Fahrzeugteil, ein elektrisches oder elektronisches Geräteteil, ein architektonisches oder Rohrleitungsteil, ein Haushaltsgeräts- oder Kosmetikartikelteil oder ein medizinisches Geräteteil handelt.

## Revendications

1. Composition de résine polyacétal comprenant: (A) une résine polyacétal, (B) un hydrazide d'acide carboxylique, (C) un antioxydant, (D) un stabilisateur thermique et (E) un stabilisateur de traitement, dans laquelle l'hydrazide d'acide carboxylique (B) comprend au moins un élément choisi dans le groupe constitué par un hydrazide d'acide carboxylique C₁₆₋₄₀ aliphatique saturé ou insaturé, un hydrazide d'acide dimère C₂₀₋₆₀ linéaire saturé ou insaturé et un hydrazide d'acide carboxylique oxycarboxylique C₁₆₋₄₀ aliphatique saturé ou insaturé ayant au moins un groupe hydroxyle par molécule,
l'antioxydant (C) comprend au moins un élément choisi dans le groupe constitué par un composé de la série de phénol encombré et un composé de la série des amines encombrées,
le stabilisateur thermique (D) comprend au moins un élément choisi parmi le groupe constitué par un composé de base contenant de l'azote, un composé de la série phosphine, un sel métallique d'un acide carboxylique organique, un composé de métal alcalin ou de métal alcalino-inorganique, une hydrotalcite, et une zéolithe,
dans laquelle le composé de base contenant de l'azote est constitué d'au moins un élément choisi dans le groupe formé par un composé d'aminotriazine, un composé de guanidine, un composé d'urée, un composé d'acide aminé, un composé d'amino-alcool, un composé d'imide et un composé d'amide,
le stabilisateur de traitement (E) comprend au moins un élément choisi dans le groupe constitué par un acide gras C₁₀₋₃₄ saturé ou insaturé, un ester d'acide gras C₁₀₋₃₄ saturé ou insaturé ou un amide d'acide gras C₁₀₋₃₄ saturé ou insaturé, un polyoxyalkylèneglycol et un composé de la série silicone : et
la proportion de l'hydrazide de l'acide carboxylique (B) est de 0,005 à 2 parties en poids, la proportion de l'anti-oxydant (C) est de 0,01 à 2 parties en poids, la proportion du stabilisateur thermique (D) est de 0,01 à 2 parties en poids et la proportion du stabilisateur de traitement (E) est de 0,03 à 3 parties en poids, pour 100 parties en poids de la résine polyacétal (A).

2. Composition de résine selon la revendication 1, dans laquelle l'hydrazide d'acide carboxylique comprend au moins un élément choisi dans le groupe constitué d'un monohydrazide d'acide monocarboxylique C₁₆₋₄₀ aliphatique saturé ou insaturé, un monohydrazide ou un dihydrazide de l'acide dicarboxylique C₁₆₋₄₀ aliphatique saturé ou insaturé, un monohydrazide de l'acide oxymonocarboxylique C₁₆₋₄₀ aliphatique saturé ou insaturé, un monohydrazide ou dihydrazide de l'acide oxydicarboxylique C₁₆₋₄₀ saturé ou insaturé, et un monohydrazide ou un dihydrazide de l'acide dimère C₂₀₋₄₀ linéaire saturé ou insaturé.

3. Composition de résine selon la revendication 1, dans laquelle l'hydrazide d'acide carboxylique comprend au moins un élément choisi dans le groupe constitué par l'hydrazide de l'acide montanique, le dihydrazide d'acide éicosanedioïque, le dihydrazide d'acide 8,12-eicosadienedioic, l'hydrazide de l'acide 12-hydroxystéarique et le dihydrazide d'acide linoléique dimère.

4. Composition de résine selon la revendication 1, dans laquelle le stabilisateur thermique comprend au moins un élément choisi dans le groupe constitué par un sel alcalino-terreux d'un acide carboxylique organique et un oxyde de métal alcalino-terreux.

5. Composition de résine selon la revendication 1, dans laquelle le stabilisateur thermique comprend un métal alcalino-terreux d'un oxyacide.

6. Composition de résine selon la revendication 1, qui comprend en outre au moins un élément choisi dans le groupe constitué par un stabilisateur résistant (à la lumière) aux intempéries, un agent améliorant la résistance au choc, un agent d'amélioration de glissement, un agent colorant, et une charge.

7. Composition de résine selon la revendication 6, dans laquelle l'antioxydant, le stabilisateur de transformation, le stabilisateur thermique, et stabilisateur résistant (à la lumière) aux intempéries sont pratiquement exempts d'une liaison ester intramoléculaire.

8. Composition de résine selon la revendication 6, dans laquelle stabilisateur résistant (à la lumière) aux intempéries comprend au moins un élément choisi dans le groupe constitué par un composé de la série benzotriazole, un composé de la série benzophénone, un composé de la série benzoate aromatique, un composé de la série cyanoacrylate, un composé de la série anilide oxalique et un composé de la série hydroxyaryle-1,3,5-triazine.

9. Composition de résine selon la revendication 6, dans laquelle l'agent améliorant la résistance au choc comprend au moins un élément choisi dans le groupe constitué par un polyuréthanne thermoplastique et un polymère acrylique à noyau-enveloppe.

10. Composition de résine selon la revendication 6, dans laquelle l'agent améliorant le glissement comprend au moins un élément choisi dans le groupe constitué d'un polymère oléfinique, d'une résine de la série des silicones et d'une résine contenant du fluor.

11. Procédé de production d'une composition de résine polyacétal qui consiste à mélanger (A) une résine polyacétal, (B) un hydrazide d'acide carboxylique, (C) un antioxydant, (D) un stabilisateur thermique et (E) un stabilisateur de traitement dans lequel la composition de résine est préparée en utilisant une extrudeuse et en alimentant au moins ledit hydrazide d'acide carboxylique par un orifice d'alimentation de l'extrudeuse,
l'hydrazide d'acide carboxylique (B) comprend au moins un élément choisi dans le groupe constitué d'un hydrazide d'acide carboxylique C₁₆₋₄₀ aliphatique saturé ou insaturé, un hydrazide d'acide dimère C₂₀₋₆₀ linéaire saturé ou insaturé, et un hydrazide d'acide oxycarboxylique C₁₆₋₄₀ aliphatique saturé ou insaturé ayant au moins un groupe hydroxyle par molécule,
l'antioxydant (C) comprend au moins un élément choisi parmi le groupe constitué par un composé de la série phénol encombré et un composé de la série des amines encombrées,
le stabilisateur de chaleur (D) comprend au moins un élément choisi dans le groupe constitué par une base contenant de l'azote, un composé de la série phosphine, un sel métallique d'un acide carboxylique organique, un composé alcalin ou alcalino-terreux inorganique, une hydrotalcite, et une zéolithe,
dans lequel le composé de base contenant de l'azote est composé d'au moins un élément choisi dans le groupe constitué par un composé d'aminotriazine, un composé de guanidine, un composé d'urée, un composé d'acide aminé, un composé d'amino-alcool, un composé d'imide, et un composé d'amide.
le stabilisateur de traitement (E) comprend au moins un élément choisi dans le groupe constitué par un acide gras C₁₀₋₃₄ saturé ou insaturé, un ester d'acide gras C₁₀₋₃₄ saturé ou insaturé ou un amide d'acide gras C₁₀₋₃₄ saturé ou insaturé, un polyoxyalkylèneglycol, et un composé de la série silicone ; et
la proportion d'hydrazide de l'acide carboxylique (B) est de 0,005 à 2 parties en poids, la proportion de l'anti-oxydant (C) est de 0,01 à 2 parties en poids, la proportion du stabilisateur de chaleur (D) est de 0,01 à 2 parties en poids et la proportion du stabilisateur de transformation (E) est de 0,03 à 3 parties en poids, pour 100 parties en poids de la résine polyacétal (A).

12. Article façonné formé à partir d'une composition de résine polyacétal selon la revendication 1.

13. Article façonné selon la revendication 12, dans lequel (1) l'émission de formaldéhyde à partir de l'article façonné qui est maintenu dans un espace fermé pendant 24 heures à une température de 80 °C n'est pas supérieure à 1,0 µg par cm² de la surface de l'article, et/ou (2) l'émission de formaldéhyde à partir de l'article façonné qui est maintenu dans un espace fermé pendant 3 heures à une température de 60 °C sous une humidité saturée est d'au plus 2 µg par cm² de la surface de l'article.

14. Article façonné selon la revendication 12, qui est une pièce d'automobile, une pièce de dispositif électrique ou électronique, une pièce d'architecture ou de canalisation, un ustensile domestique ou une partie d'un article cosmétique ou d'un dispositif médical.
